# EUROPEAN PATENT SPECIFICATION

(11) **EP 4 434 797 B1**
(45) Date of publication and mention of the grant of the patent: **05.11.2025**
(21) Application number: 23163667.1
(22) Date of filing: 23.03.2023
(51) Int. Cl.: B60L 15/20, B60L 50/20, B62J 45/411, B62M 6/50, B62M 3/00, B60K 1/00, H02K 7/116

(54) **METHOD FOR MANUFACTURING A MOTOR UNIT FOR AN ELECTRIC VEHICLE**
VERFAHREN ZUR HERSTELLUNG EINER MOTOREINHEIT FÜR EIN ELEKTROFAHRZEUG
PROCÉDÉ DE FABRICATION D'UNE UNITÉ DE MOTEUR POUR UN VÉHICULE ÉLECTRIQUE

(43) Date of publication of application: 25.09.2024
(73) Proprietor: TQ-Systems GmbH, 82229 Seefeld (DE)
(72) Inventor: HORNUNG, Heinz, 82229 Seefeld (DE)
(74) Representative: Schweiger, Martin

(56) References cited:
- EP-A1- 2 695 805
- EP-A1- 4 124 556
- WO-A1-2022/137212

## Description

### Technical field

The described examples are related to an external force measurement unit, especially for an electric bicycle drive.

Electric bicycles are increasingly used in many countries. An electric bicycle can be driven both by manual force exerted by a cyclist, but also by an electric motor. The electric motor is typically operated in order to assist the cyclist in a normal operation. The cyclist operates pedals in a normal way but needs to exert much less force in order to reach or maintain a certain speed. For that purpose, the force exerted by the cyclist is typically measured in order to suitably control the motor.

The EP4124556 shows an external force measurement unit for measuring an external force applied to a spindle with a load cell with a support ring, wherein a first flap and a second flap are arranged on the support ring, wherein the second flap is arranged opposite to the first flap on the support ring, and wherein each flap is arranged in a radial direction to the outside of the outer ring, and a first flap end and a second flap end being arranged at respective ends of the first flap and the second flap. A first strain gauge is arranged on the first flap and a second strain gauge is arranged on the second flap. Depending on a change of length of the first flap or the second flap due to a material expansion, the first strain gauge and/or the second strain gauge change their respective resistance. An evaluation unit is adapted to measure a resistance of the first strain gauge and of the second strain gauge and to determine an offset of the external force being induced by the weight of the spindle. The evaluation unit is further adapted to determine a position of a lever arm of the spindle and to determine the external force which is applied to the adapted spindle based on the measured resistance and the determined offset of the first force. This torque value is used for calculating a further torque value which is then used for controlling an electric motor based on the calculated torque.

The document WO 2022/137212 A1 discloses an external force measurement system with a load cell and a support ring, a measurement method, and an electrically assisted bicycle.

The document EP 2 695 805 A1 discloses a pedal pressure sensing mechanism at the crank spindle for an electric bicycle.

It is an object to improve an electric drive for use in an electric vehicle.

This object is solved by the subject matter of the independent claims. Further solutions are given by the subject matter of the dependent claims.

Embodiments of the invention are associated with various advantages and/or technical effects.

The application provides a motor unit for an electric vehicle, with an electric motor with a gearbox arrangement with a spindle for applying an external force to the motor unit with a motor control unit, a load cell with a first strain gauge and a second strain gauge, the load cell being provided for measuring an external force that is applied to the motor unit. The electric motor, the motor control unit and the load cell are connected with each other. And the memory unit comprises a computer software for automatically controlling the motor control unit such that a control of supplying electric power from an electric power source to the electric motor is provided, based on the separate measurements of the first strain gauge and the second strain gauge.

In an embodiment of an external force measurement unit for measuring an external force fe applied to a spindle, the external force measurement unit comprises:
- a load cell with a support ring,
- wherein a first flap and a second flap are arranged on the support ring, wherein the second flap is arranged opposite to the first flap on the support ring,
- wherein each flap is arranged in a radial direction towards the outside of the support ring,
- a first strain gauge, which is arranged on the first flap and a second strain gauge, which is arranged on the second flap,
- an evaluation unit for measuring the resistance of the first strain gauge and the resistance of the second strain gauge, wherein the resistance of the first strain gauge is measured separately from the resistance of the second strain gauge,
- a first bearing support for taking up a first bearing in a first bearing seat, wherein the first bearing is adapted to take up a rotating spindle.

In a development, the evaluation unit is configured to determine the external force fe based on the resistance of the first strain gauge and the resistance of the second strain gauge.

The use of a load cell with a support ring and flaps, along with strain gauges and an evaluation unit, provides a precise and accurate measurement of the external force fe applied to the spindle.

The measurement of the resistance of both strain gauges provides a redundant and reliable method for determining the external force fe, reducing the potential for errors and improving the overall accuracy of the system.

Especially, the evaluation unit may be configured to determine the resistances of the strain gauges separately. Especially, the external force is applied by a cyclist. Also, a torque may be applied by a cyclist.

In a development not covered by the claims, the evaluation unit is configured to use, at each point in time, only one resistance to determine the external force.

The use of only one resistance at each point in time reduces the complexity of the system and the processing required by the evaluation unit, improving the overall efficiency and speed of the system.

In a development, the evaluation unit is configured to use, at each point in time, the resistance that has a greater absolute value than the other resistance.

The application creates signals that reflect a dependence between resistance and external force. One can measure the resistance for calculating the external force but the measurements are also done for identifying times when and when not the electric motor should be powered, and if it is power, then how much electric power is provided to the motor. All that is done by aiming at identifying the torque that is excerted to a spindle of the drive unit by the rider of the bicycle, and to amplify that torque by means of the electric motor and the associated gearbox assembly. The relationship between the torque provided by the rider and the torque provided by the electric motor is highly non-linear because it depends on many parameters and that explains why in some embodiments of the invention, no forces and not torque as such are calculated.

The use of the resistance with the greater absolute value as the determining factor for the external force provides a robust method for measuring the external force, as it takes into account any potential issues or errors with one of the strain gauges.

In a development, the evaluation unit is configured to calculate a torque based on the external force.

The calculation of torque based on the external force provides a more comprehensive understanding of the performance and behavior of the spindle, allowing for better control and optimization of the system.

In a development, the torque is calculated, at least when no angle of rotation is available, as the external force multiplied by a length of a pedal crank,
and/or
the torque is calculated, when an angle of rotation is available, as the external force multiplied by a length of a pedal crank and multiplied by a cosine of the angle of rotation. While these calculations can be done, a further goal of the application is to receive a measurement of the forces and torques that are provided by the rider and then determine what is the additional torque to be provided by the electric motor without explicitly calculating these forces and torques but rather to provide a control of the electric power that is fed to electric motor by measuring specific mechanical deformations of the drive unit under these the forces and torques.

Depending on the reference frame, a sine may be used instead of a cosine.

The use of the external force fe multiplied by the length of the pedal crank allows for a more accurate calculation of the torque applied to the system, improving the overall accuracy and reliability of the system.

The use of the cosine of the angle of rotation, when available, improves the accuracy of the calculation of torque, taking into account the changing orientation of the pedal crank.

In a development, one or both resistances are scaled before the external force fe is calculated.

The scaling of resistances improves the accuracy and reliability of the calculation of external force, allowing for more precise and accurate measurements.

The scaling of resistances eliminates the need for manual adjustments, improving the overall efficiency and speed of the system.

In a development, one or both resistances are smoothed and/or low-pass filtered before the external force fe is calculated.

The smoothing and low-pass filtering of resistances eliminates noise and other inaccuracies in the measurement of resistances, improving the overall accuracy and reliability of the system.

The smoothing and low-pass filtering of resistances improves the stability and consistency of the system, providing more reliable and accurate measurements over time.

In a development, smoothing is performed over at least 10 values taken at different consecutive points in time,
and/or
smoothing is performed over at most 22 values taken at different consecutive points in time.

In a specifically preferred implementation, smoothing is performed over 16 values taken at different consecutive points in time.

The specific number of values used in smoothing provides a balance between accuracy and responsiveness, allowing for more accurate and reliable measurements while maintaining the speed and efficiency of the system.

The specific number of values used in smoothing can be optimized for specific applications, providing greater flexibility and versatility for the system.

In a development, the evaluation unit is configured to determine a zero-point of the resistance of the first strain gauge.

In a development, the evaluation unit is configured to determine a zero-point of the resistance of the second strain gauge.

The determination of the zero-point of the strain gauges improves the accuracy and reliability of the measurements, allowing for more precise and accurate measurements. The determination of the zero-point of the strain gauges eliminates the need for manual adjustments, improving the overall efficiency and speed of the system.

The zero-point may also be denoted as an offset, which may especially be used in the description of the accompanying figures.

In a development, the evaluation unit is configured to determine the zero-point of the resistance of the first strain gauge based on a tracking of maximum turning points of the resistance.

In a development, the evaluation unit is configured to determine the zero-point of the resistance of the second strain gauge based on a tracking of maximum turning points of the resistance.

Accurate determination of the zero-point of the resistance allows for more accurate measurement of external forces, improving the overall accuracy and reliability of the system.

The use of tracking maximum turning points of the resistance allows for automatic and continuous zero-point determination, reducing the potential for human error and improving the efficiency of the system.

The use of the difference between the resistance of the strain gauges and its zero-point allows for accurate measurement of external forces, improving the overall accuracy and reliability of the system.

Especially, the zero-point of a resistance can be continuously updated such that it corresponds to a mean value of a certain number of turning points that have occurred just before a specific point in time at which the zero-point should be updated. A mean value may be generalized to an average value.

In a development, the evaluation unit is configured to determine the external force fe based on a difference between the resistance of the first strain gauge and its zero-point.

In a development, the evaluation unit is configured to determine the external force fe based on a difference between the resistance of the second strain gauge and its zero-point.

The use of two strain gauges provides redundancy and improves the overall reliability of the system.

In a development, the zero-point of the resistance of the first strain gauge is continuously updated and/ or is first calculated after two revolutions of the spindle, and/ or
the zero-point of the resistance of the second strain gauge is continuously updated and/ or first calculated after two revolutions of the spindle.

Continuously updating the zero-point of the resistance allows for real-time correction of any changes in the resistance, improving the overall accuracy and reliability of the system.

Especially, an entire revolution may be regarded as a revolution.

In a development, the evaluation unit is further configured to determine an equalized force.

The determination of an equalized force allows for more accurate measurement of external forces, improving the overall accuracy and reliability of the system.

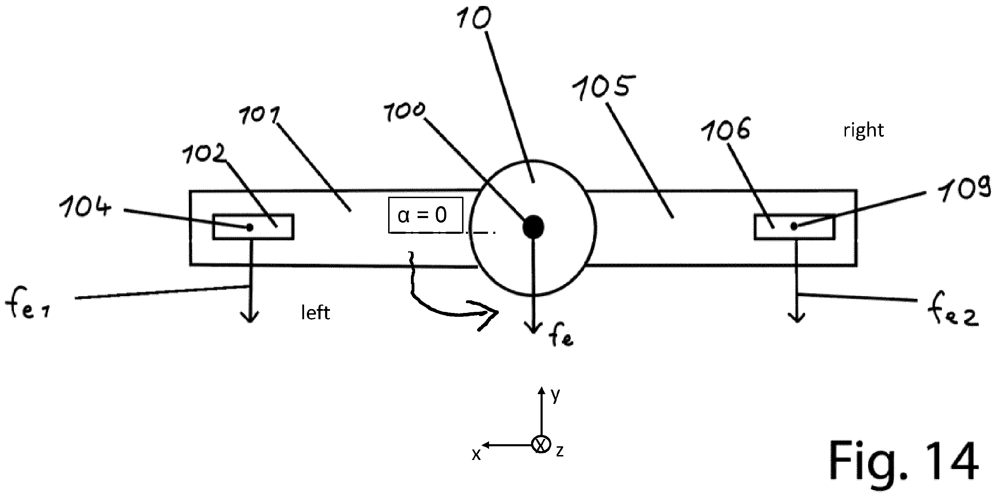

In a development, the equalized force is determined as mean value between a bottom force and a top force. The equalized force is calculated from the two measurements of the two forces Fe1 and Fe2 from the two strain gauges are measured, for determining the corresponding value when the rider is riding while standing up, not sitting in the saddle. As we measure the strain gauges at only one side of the drive unit and as there is a lever relationship between the left side and the right side, that means that if the rider stands up as shown in Fig. 14, the force measurement does see a bigger force on the left side, which is where the force measurement is provided, as compared the opposite side on the left. The algorithm sees a pressure force on the left side. The control system needs now to decide whether there was a real force applied to the left side, which requires an additional torque from the electric motor, or whether there is an equalized force provided by the rider standing up, without pedaling. The latter case does not require additional torque from the electric motor.

The equalized force is limited to a range between e.g. 10 N and e.g. 200 N because these are typical example values that make sense when a rider is using the electric bike. These example values depend on the design of the electric drive, and they represent a part of the body weight of the rider which can be 2,000 N. These values are almost never exceeded. Providing a minimum threshold value of e.g. 10N reduces noise-inflicted control oscillations.

The use of the mean value between bottom force and top force provides a balanced and consistent measurement of external forces, improving the overall accuracy and reliability of the system.

The values "256" are scaling factors that follow from implementing the example and they have nothing to do with the algorithm. The Min and Max values are used to calculate the equalized force.
iBotForce is the maximum fore that is excerted towards the bottom, downwards, and iTopForce is the maximum fore that is excerted towards the top, upwards, all that within one pedal round of 360 degrees.

M_iScaleLeft - for bottom - and m_iScaleRight - for top - are sensitiveness factors that are measured while starting up the control algorithm.

In a development, the strain gauges are solely responsive to pressure.

This results in
- Improved accuracy and precision of measuring external forces.
- Increased reliability, as the strain gauges only respond to pressure, reducing the potential for interference from other factors.
- Simplified design and construction of the strain gauges, reducing costs and increasing efficiency.

In a development, an electric drive with a motor housing is used in an electrically assisted bicycle, with an electric motor and with an external force measurement.

This results in
- Improved accuracy of determining the angle of rotation, by only considering one of the strain gauges.
- Simplified evaluation process, reducing computational resources and time.

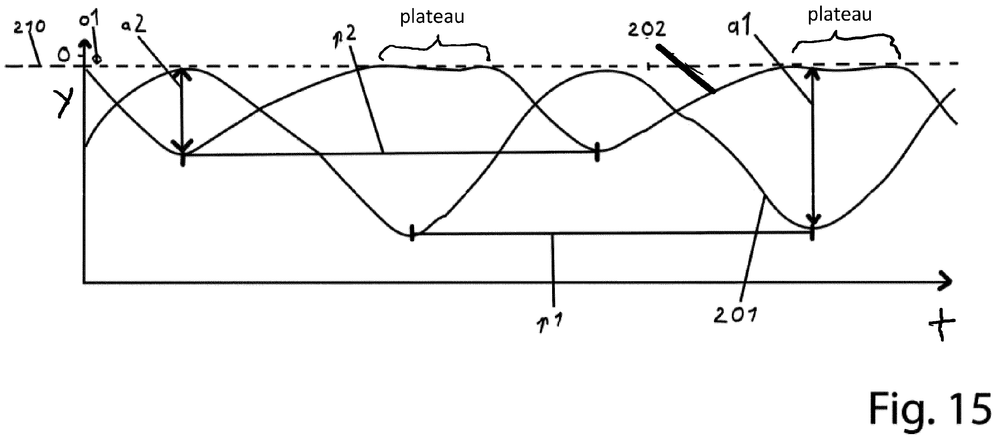

The measurement algorithm is described more accurately and completely with respect to Fig. 15, 16, 17, and others.

In an embodiment of the external force measurement unit for measuring an external force applied to a spindle, the external force measurement unit comprises:
- a load cell with a support ring,
- wherein a first flap and a second flap are arranged on the support ring, wherein the second flap is arranged opposite to the first flap on the support ring,
- wherein each flap is arranged in a radial direction towards the outside of the support ring,
- a first strain gauge, which is arranged on the first flap and a second strain gauge, which is arranged on the second flap,
- an evaluation unit for measuring the resistance of the first strain gauge and the resistance of the second strain gauge, wherein the resistance of the first strain gauge is measured separately from the resistance of the second strain gauge,
- a first bearing support for taking up a first bearing in a first bearing seat, wherein the first bearing is adapted to take up a rotating spindle,
- wherein the evaluation unit is configured to determine an angle of rotation of the spindle based on at least one of the resistances.

The use of a load cell with a support ring provides a more accurate and reliable measurement of external forces applied to the spindle, as the load cell is able to directly measure the forces acting on the spindle.

The support ring increases the stability and rigidity of the load cell, reducing the potential for measurement errors and improving the overall accuracy of the system.

The arrangement of the first and second flaps in a radial direction towards the outside of the support ring allows for a more effective measurement of external forces acting on the spindle, as the flaps are able to directly respond to the forces acting on the spindle.

The positioning of the second flap opposite to the first flap on the support ring provides a balanced and symmetrical measurement of external forces, reducing the potential for measurement errors and improving the overall accuracy of the system.

The use of the first and second strain gauges provides a more accurate and reliable measurement of external forces applied to the spindle, as the strain gauges are able to directly measure the strains caused by the forces.

The separate measurement of the resistance of the first and second strain gauges allows for a more accurate and reliable determination of the angle of rotation of the spindle, as the resistance of each strain gauge can be independently measured and analyzed.

The use of the evaluation unit provides a more efficient and automated method for measuring the resistance of the first and second strain gauges, reducing the potential for human error and improving the reliability of the system.

The ability of the evaluation unit to determine the angle of rotation of the spindle based on at least one of the resistances allows for a more accurate and reliable measurement of the angle of rotation, improving the overall accuracy and performance of the system.

In a development, the angle of rotation is determined based on the resistance of the strain gauge that is positioned above the other strain gauge.

This results in
- Improved accuracy and precision of determining the angle of rotation, by considering multiple points in time.
- Improved analysis of the angle of rotation over time, providing valuable data for design and performance optimization.

In a development, the angle of rotation is determined based on a field comprising entries for several points in time, each point in time corresponding to a measurement of one of the resistances, the entries of the field having a positive entry for each point in time if the resistance exceeds a threshold and having a negative entry otherwise. The field is a data field for storing the entries.

This results in
- Improved accuracy of determining the angle of rotation, by considering predefined sectors of consecutive positive entries.
- Simplified evaluation process, by reducing the need to consider every single entry in the field.
- Improved analysis of the torque, by accurately determining the angle of rotation with respect to the origin.

The origin may especially provide a reference for angles.

In a development, if a sector with a predefined number of consecutive entries in the field is filled with positive entries, a start of that sector is taken as an origin.
- wherein the angle of rotation is determined with respect to the origin.
- wherein the angle or rotation is determined by multiplying a predetermined differential angle with the number of points in time since the origin.
- wherein a torque is calculated as an external force multiplied by a length of a pedal crank and multiplied by a cosine of the angle of rotation.

Determining the origin based on consecutive positive entries allows for a more precise and reliable determination of the origin, as it takes into account multiple data points, reducing the potential for errors or inaccuracies.

The use of consecutive positive entries as a criterion for the origin reduces the potential for false detections or incorrect identifications of the origin.

Determining the angle of rotation with respect to the origin allows for a more precise and accurate calculation of the angle of rotation, as it takes into account the starting position of the rotation.

The determination of the angle of rotation with respect to the origin provides a consistent and reliable method for tracking the angle of rotation over time.

Determining the angle of rotation based on the number of points in time since the origin allows for a dynamic and continuously updating calculation of the angle of rotation, providing real-time information about the angle of rotation.

The use of a differential angle as a factor in determining the angle of rotation provides a scalable and adjustable method for calculating the angle of rotation, allowing for customization and optimization of the system.

Calculating the torque based on external force, length of the pedal crank, and the cosine or sine of the angle of rotation allows for a more precise and accurate calculation of the torque, as it takes into account multiple factors that affect the torque.

The use of the cosine of the angle of rotation as a factor in calculating the torque provides a method for considering the orientation of the pedal crank, improving the accuracy of the torque calculation.

The external force measurement unit comprises a load cell and an evaluation unit, as well as a first bearing support. The load cell includes a support ring.

The electric drive, which is part of the motor housing comprises an electric motor and the external force measurement unit. The electric drive is also a member of the electrically assisted bicycle. The motor housing, in turn, includes the electric drive.

The electric motor belongs to the electric drive. The external force measurement unit is also part of the electric drive.

The electrically assisted bicycle comprises the electric drive and a chain. The measurement directions and measurement direction are equivalent and refer to the same concept.

The chain is also a part of the electrically assisted bicycle.

A "motor unit", as used in the context of an electric bicycle drive, refers to a unit that includes an electric motor, possibly a controller or motor controller, and other components used to control the operation of the motor, and possibly also a battery. This unit receives input signals from a control system and uses these signals to control the power supplied to the motor. The motor unit may also include sensors and other components to monitor the performance of the motor and provide feedback to the control system. In an electric bicycle drive, the motor unit is responsible for converting electrical energy into mechanical energy, which is used to drive the bicycle. Other terms for "motor unit" are "electric drive", "drive", "drive unit", and partly overlapping terms such as "power train" and "power drive".

An "Electric motor" is a machine that converts electrical energy into mechanical energy. In the context of these patent Examples, it refers to an electric motor that is part of an electric drive for an electrically assisted bicycle.

An "ebike" is also called "electric bike" and it is a two or three wheeler that comprises a motor unit with an electric motor and often but not always a gearbox arrangement and a motor control unit, and - often arranged separately from the motor unit - a battery or battery unit.

A "deflector blad" can be provided in the form of a "chain ring" or a "chain blade".

A "Motor housing" is a protective casing that encloses and protects the electric motor in an electric drive for an electrically assisted bicycle.

An "External force measurement unit" is a device for measuring an external force applied to a spindle. It comprises a load cell with a support ring, flaps with strain gauges, an evaluation unit, a first bearing support, and a first bearing.

A "Load cell" is a device that is used to measure force or weight. In the context of these patent Examples, it refers to a load cell with a support ring that is part of the external force measurement unit.

A "First bearing support" refers to a support that takes up a first bearing in a first bearing seat. It is part of the external force measurement unit and is used to take up a rotating spindle.

A "First bearing" refers to a mechanical element that supports a rotating spindle. It is part of the external force measurement unit and is adapted to take up a rotating spindle.

An "Evaluation unit" refers to a device that measures the resistance of the strain gauges and determines a signal that is related to the external force based on the resistance values. It is part of the external force measurement unit.

A "Second bearing" refers to a mechanical element that supports a rotating spindle. It is part of the external force measurement unit and is adapted to take up a rotating spindle.

A "Spindle" refers to a rotating shaft that is used to transmit power in a machine. In the context of these patent Examples, it refers to a spindle that is subject to an external force that is measured by the external force measurement unit.

The term "angular encoder" designates a device that measures the angle of rotation of a spindle or shaft.

The term "battery holder" designates a device that holds and secures a battery in place.

The term "holding plate" designates a flat piece of material used to hold or secure an object in place.

The term "screw" designates a threaded fastener used to join two or more objects together.

The term "first fastening element" designates a device used to secure or fasten the first part of a device or assembly.

The term "second fastening element" designates a device used to secure or fasten the second part of a device or assembly.

The term "sealing lip" designates a lip or ridge used to prevent liquid, air, or other material from escaping.

The term "load cell carrier seat" designates a device or structure used to hold and support a load cell.

The term "support ring" designates a ring-shaped device used to provide support or stability to another object.

The term "first flap" designates a flat, movable piece of material attached to the support ring in the external force measurement unit.

The term "first flap end" designates the end of the first flap.

The term "first strain gauge" designates a device that measures the strain on an object, such as the first flap in the external force measurement unit.

The term "second flap" designates a flat, movable piece of material attached to the support ring in the external force measurement unit, opposite the first flap.

The term "second flap end" designates the end of the second flap.

The term "second strain gauge" designates a device that measures the strain on an object, such as the second flap in the external force measurement unit.

The term "first bearing seat" designates a device or structure used to hold and support a first bearing.

The term "mechanical guiding" designates a mechanism used to guide or direct the movement of an object.

The term "first outer ring" designates a ring-shaped structure located on the outer side of the first bearing.

The term "first inner ring" designates a ring-shaped structure located on the inner side of the first bearing.

The term "first bearing element" designates a component or element used to support and hold a rotating spindle in the first bearing seat.

The term "spindle symmetry axis" refers to the central axis around which a rotating spindle rotates.

The term "first crank" refers to a component of a bicycle, typically attached to a pedal, used to convert rotational motion into linear motion.

The term "first pedal" refers to a component of a bicycle that the rider pushes with their feet to propel the bike.

The term "second crank" refers to a component of a bicycle, typically attached to a pedal, used to convert rotational motion into linear motion.

The term "second pedal" refers to a component of a bicycle that the rider pushes with their feet to propel the bike.

The term "freewheel" refers to a component in a bicycle that allows the wheel to rotate freely, independent of the pedals and cranks.

The term "hall sensor" refers to a sensor that measures magnetic fields and is commonly used in position detection.

The term "magnetic ring" refers to a ring made of magnetic material.

The term "plastic cover" refers to a protective cover made of plastic material.

The term "chain" refers to a component of a bicycle that transmits power from the pedals to the wheel.

The term "hall sensor signal" designates a signal generated by a Hall sensor, which is a device used to measure magnetic fields.

The term "ramp function" designates a mathematical function that increases linearly over a certain interval.

The term "cross point" designates a point at which two curves intersect or cross each other.

The term "baseline" designates the starting point or reference value for a measurement.

The term "magnet" designates a material that has a magnetic field.

The term "transmitter bearing" designates a bearing used to transmit signals from a Hall sensor.

The term "pin-ring" designates a ring with a pin that is used to transmit a force.

The term "outer ring" designates the outermost ring in a multi-ring configuration.

The term "inner ring" designates the innermost ring in a multi-ring configuration.

The term "outer bearing" designates a bearing that is positioned on the outside of a device.

The term "rotor" designates a rotating part of a machine, such as a motor or generator.

The term "sprocket carrier" designates a component that supports a sprocket, which is a type of gear.

The term "bottom bracket" designates a part of a bicycle that connects the crankset to the frame. Other terms for "bottom bracket" are "spindle" or "crank spindle".

The term "housing fastening elements" designates components used to secure a housing, such as screws, bolts, or clamps.

The term "first motor housing part" designates the first part of a motor housing, which may be composed of multiple pieces.

The term "second motor housing part" designates the second part of a motor housing, which may be composed of multiple pieces.

The term "third motor housing part" designates the third part of a motor housing, which may be composed of multiple pieces.

The term "third bearing" designates a bearing that is positioned third in a multi-bearing configuration.

The term "first part of a strain gauge" designates the first part of a strain gauge, which is a device used to measure strain or deformation in a material.

The term "second part of a strain gauge" designates the second part of a strain gauge, which is a device used to measure strain or deformation in a material.

The term "external force gauge" designates a gauge used to measure external forces, such as the forces applied to a spindle.

The term "first force" designates a specific force that is being measured by the external force gauge.

The term "second force" designates a specific force that is being measured by the external force gauge.

The term "offset" designates a value that is subtracted from a measurement to correct for a known error or bias.

The term "first period" designates a period of time in which a specific force is being measured by the external force gauge.

The term "second period" designates a period of time in which a specific force is being measured by the external force gauge.

The term "center of a first period" designates the center of the first period in which a specific force is being measured by the external force gauge.

The term "center of a third period" designates the center of the third period in which a specific force is being measured by the external force gauge.

The term "first amplitude" designates the magnitude or intensity of the first force being measured by the external force gauge.

The term "second amplitude" designates the magnitude or intensity of the second force being measured by the external force gauge.

The term "third amplitude" designates the magnitude or intensity of the third force being measured by the external force gauge.

The term "first horizontal force" designates a specific force that is being measured horizontally by the external force gauge.

The term "second horizontal force" designates a specific force that is being measured horizontally by the external force gauge.

The first external force is the force applied to the first flap of the load cell in the external force measurement unit. The second external force is the force applied to the second flap of the load cell in the external force measurement unit. These forces are measured by the resistance of the first strain gauge and the second strain gauge, respectively. The external force measurement unit uses these forces to determine the external force applied to the spindle, which is used to calculate a torque and/or an equalized force. The equalized force is a mean value between a bottom force and a top force and is used to provide a stable measurement of the external force. The strain gauges are only responsive to pressure. The external force measurement unit is used in an electric drive for an electrically assisted bicycle.

An "electric drive" designates a system that uses electricity to power a device or machine.

An "electrically assisted bicycle" designates a bicycle that uses an electric motor to assist the rider in pedaling.

A "pedal crank" designates a component of a bicycle that converts the rotational motion of the pedals into linear motion, which drives the chain and gears of the bike.

A "measurement direction" refers to the orientation or direction in which a measurement is taken.

A "rotating spindle" designates a shaft that rotates about an axis and is used for transferring motion between components in a machine or device.

Other terms for "freewheel" are "freewheel device" or "freewheeling device".

### Brief description of drawings

The present disclosure is illustrated by way of example and not limited in the accompanying figures in which like reference numerals indicate similar elements. Embodiments of the application will now be described with reference to the attached drawings.

In the figures, the same or similar features are referenced by the same reference numerals.
Fig. 1 shows a motor unit 1 comprising an external force measurement unit 4 and with a gearbox arrangement,
Fig. 2 shows a schematically side view of the motor unit 1, which is shown in Fig. 1,
Fig. 3 shows the motor unit 1 as shown in Fig. 1 with a freewheel 108 in a view on a front side with the first end 103,
Fig. 4 shows the motor unit 1 as shown in Fig. 3 with the freewheel 108 in a view on a backside with a second end 107,
Fig. 5 shows the motor unit 1 as shown in Fig. 4 with a motor housing 3, taking up the external force measurement unit 4 with the load cell 5 and the spindle 10,
Fig. 6 shows the load cell 5 in a front view from the first end 103 of the spindle 10 as shown in Fig. 3,
Fig. 7 shows the load cell 5 in a back view from the second end 107 of the spindle 10 as shown in Fig. 4,
Fig. 8 shows the motor unit 1 with a motor housing 3 as shown in Fig. 5 with first fastening elements and second fastening elements,
Fig. 9 shows the angular encoder 11 comprising a hall sensor 111 and a magnetic ring 112,
Fig. 10 shows the strain gauge as shown in Fig. 1,
Fig. 11 shows the external force measurement unit 4 assembled with the hall sensor 111 of the angular detector in a front view,
Fig. 12 shows the external force measurement unit 4 assembled with the hall sensor 111 of the angular detector in a back view,
Fig. 13 shows schematically the spindle 10 with the pedals and the pedal cranks in a vertical position while the external forces fe act on the pedals in a side view,
Fig. 14 shows schematically the spindle 10 with the pedals and the pedal cranks in a horizontal position while the external forces fe act on the pedals in a side view,
Fig. 15 shows typical signals with the measured resistances of each strain gauge mapped to each pedal,
Fig. 16 shows typical signals with the measured resistances of each strain gauge mapped to each pedal for a low cadence without motor support,
Fig. 17 shows typical signals with the measured resistances of each strain gauge mapped to each pedal for a high cadence without motor support,
Fig. 18 shows a crosssection view along the intersection line AA of the load cell 5 with the spindle 10 mounted in the motor housing 3 as shown in Fig. 8,
Fig. 19 shows a schematically section view of the motor unit 1 with the electric motor 2 and a freewheel 108,
Fig. 20 shows a strain gauge measuring only in one direction,
Fig. 21 shows a field for determining an angle of rotation,
Fig. 22 shows a support ring with a recess.and a strain gauge,
Fig. 23 shows a schematic view of motor unit with a gearbox arrangement with a battery and a motor control unit,
Fig. 24 shows a schematic view of a motor unit and with a gearbox arrangement that is provided in an ebike with a conventional powertrain, and
Fig. 25 shows a schematic view of a motor unit and with a gearbox arrangement that is provided in an ebike with a powertrain that comprises an elevated diverter pulley that is arranged in a tight side of a chain between a rear sprocket and a drive sprocket of the motor unit.

### Detailed figure description

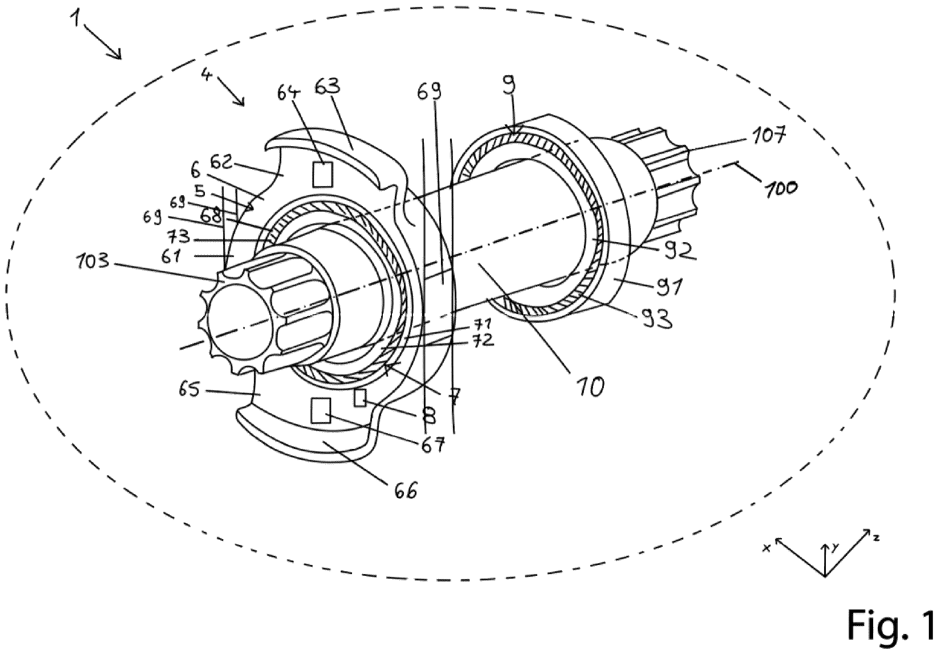

Fig. 1 shows an electric drive in the form of a motor unit 1 comprising an external force measurement unit 4.

The measurement unit 4 comprises a load cell 5 with a first bearing support 6. The first bearing support 6 comprises a support ring 61. A first flap 62 is arranged on the support ring 61. The support ring 61 is also part of the load cell 5. The first flap 62 partially surrounds the support ring 61. The first flap 62 is arranged on an opposite side to a second flap 65. The second flap 65 also partially surrounds the support ring 61. The first flap 62 and the second flap 65 have an equal size. The first flap 62 and the second flap 65 are arranged in a radial direction to the support ring 61 on an outside of the load cell 5.

The first flap 62 is clamping an angle of 90° degree to the support ring 61. Also, the second flap 65 is clamping an angle of 90° Degree to the support ring 61.

A first flap end 63 is arranged on an end of the first flap 62. The first flap 62 comprises a first strain gauge 64 in an area between the first flap 62 and the support ring 61. A second flap end 6 is arranged on an end of the second flap 65. The second flap 65 comprises a second strain gauge 67 in an area between the second flap 65 and the support ring 61.

The first bearing support 6 also comprises a first bearing seat 68, which takes up a first bearing 7. The first bearing 7 comprises a first outer ring 71 and a first inner ring 72. At least one first bearing element 73 is arranged between the first outer ring 71 and the first inner ring 72.

An evaluation unit 14 is arranged on the load cell 5.

The motor unit 1 also comprises a second bearing 9. The second bearing 9 comprises a second outer ring 91. The second outer ring 91 is taken up in a support bearing seat, which is not shown here, and a second inner ring 92. At least one second bearing element 93 is arranged between the second outer ring 91 and the second inner ring 92.

The first inner ring 72 of the first bearing 7 and the second inner ring 92 takes up a spindle 10 with a spindle symmetry axis 100 as shown in Fig. 1. The spindle 10 comprises a first end 103 and a second end 107.

The motor unit 1 also comprises an angular encoder 11, which is not shown here, for detecting the change of the angular position of the spindle 10. In an embodiment not shown here, the angular encoder 11 detects the absolute angular position of the spindle 10.

The load cell 5 also comprises mechanical guiding 69. The mechanical guiding 69 lock a movement of the load cell 5 in x-direction and z-directions.

In an embodiment the mechanical guiding 69 are on an outside of the load cell 5 in an 90°-degree angle next to each flap. The mechanical guiding 69 is comprising a plastic pin, which is not shown here, which locks the movement of the load cell 5 in in x-direction and z- directions. The plastic pin is arranged on the mechanical guiding 69 and runs a long a guidance, which is arranged on the loading cell carrier seat 51.

In a further embodiment each flap end 63, 66 a plastic pin on each end along the z-axis. The plastic pins are running in a guidance. This mechanical guiding 69 also locks the movement of the load cell 5 at least in x-direction. The x-direction faces forward, in the normal riding direction of the e-bike that is equipped with the motor unit 1.

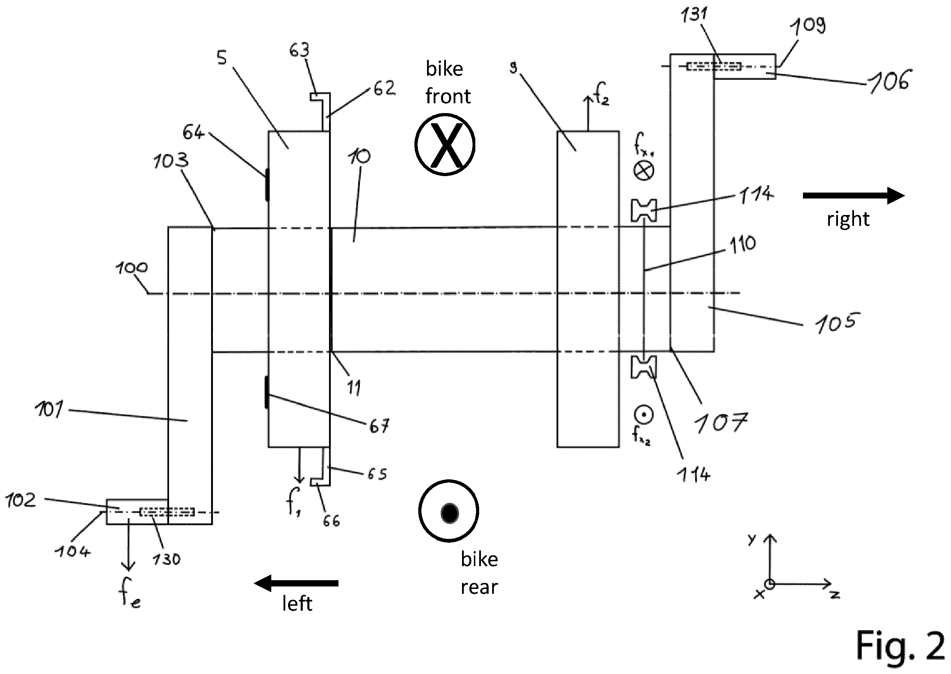

Fig. 2 shows a schematically side view of the motor unit 1 which is shown in Fig. 1.

On the first end 103, of the spindle 10 is a first crank 101 arranged. The first crank 101 is connected through a first pedal 102 spindle 10 with a first symmetrical axis 104 as shown in Fig. 2 to a first pedal 102. The first pedal 102 is rotatable around the first symmetrical axis 104 and transfers a force to the first crank 101. The second crank 105 is connected through a second pedal 106 spindle 10 with a first symmetrical axis 109, as shown in Fig. 2, to a second pedal 106. The second pedal 106 is rotatable around the second symmetrical axis 109, as shown in Fig. 2, and transfers a force to the first crank 101.

As shown in Fig. 2 the external force fe acts on the first pedal 102. The external force fe is a force along the y-direction and acting mainly in negative y-direction. The first pedal crank 101 transfers the external force fe from the first pedal 102 through the first pedal spindle 10 to the first pedal crank 101. The first pedal 102 is rotatable around the first spindle 10 symmetrical axis 104, as shown in Fig. 2. So, the first pedal 102 stays in a horizontal position.

The first pedal 102 crank is rotatable around the spindle symmetrical axis 100. The first pedal crank 101 is mounted to the first spindle end 103 to transfer the external force fe to the spindle 10.

The spindle 10 transfers the external force fe to the first bearing 7 and the second bearing 9. The first inner bearing ring 72 of the first bearing 7 takes up a first force f1, which is part of the external force fe. The second inner bearing 92 of the second bearing 9 takes up a second force f2, which is also part of the external force fe. The sum of the first force f1 and the second force f2 is equal to the external force fe. The first inner bearing ring 72 and the second inner bearing ring 92 transfer each force f1, f2 to each rolling roller 73, 93 of each bearing 7, 9. Each rolling roller 73, 93 arranges each inner bearing ring 72, 92 rotatable to each outer bearing ring 71, 91.

The support ring 61 takes up the first bearing 7. The first bearing 7 transfers the first force f1 to the support ring 61. The support ring 61 transfers the first force f1 to the first flap 62 and to the second flap 65.

The external force fe, the first force f1, and the second force f2 are vertical forces. Vertical forces are acting in the y-direction.

In an embodiment not shown here, the external force fe is acting on the second pedal 106. Like explained above, the second pedal 106 transfers the external force fe through the second pedal spindle 109 to the second pedal 106 crank 105. The second pedal 106 is rotatable around the second pedal spindle 109 with the second pedal spindle symmetrical axis 131, as shown in Fig. 2.

The second pedal crank 105 transfers the external force fe to the spindle 10 and is rotatable around the spindle symmetrical axis 100, as shown in Fig. 2. The second pedal crank 105 is mounted to the second end 107 of the spindle 10. The external force fe, which is transferred to the spindle 10 is in the same way as explained above transferred through the first bearing 7, the second bearing 9, and the load cell 5 to the motor housing 3.

A chain 114, which is not shown here, transfers the horizontal forces fx1, fx2 to the deflector blade 110. Other terms for "deflector blade" are "chain ring" or "chain blade". The first horizontal force fx1 pulls the deflector blade 110 in horizontal x-direction. The second horizontal force fx2 pushes the deflector blade 110 in horizontal x-direction.

The deflector blade 110 transfers the horizontal forces fx1, fx2 to the spindle 10. The spindle 10 also transfers the horizontal forces fx1, fx2 through the ball bearings 7, 9, as explained above, to each ball bearing seat. The horizontal forces fx1, fx2 are separate forces to the forces fe, f1, f2.

The second ball bearing 9 delivers the second force f2 to the motor housing 3.

Due to the conveyed first force f1, the first strain gauge 64 measures a change of length of the first flap 62. The second strain gauge 67 also measures a change of length of the second flap 65 depending on the first force f1. Each Strain gauge 64, 67 changes its resistance due to their change of length.

An evaluation unit 14 that is not shown in Fig. 1 determines the resistance of each strain gauge 64, 67. Due to a predefined material expansion coefficient the evaluation unit 14 could calculate a force, which is measured with each strain gauge 64, 67, depending on the change of resistance of each strain gauge, 64, 67 and could calculate the first force f1.

The strain gauges 64, 67 are arranged to measure mainly the change of length in radial flap direction, as shown in Fig. 1.

Fig. 2 also shows the angular encoder 11. The angular encoder 11 is mounted to the load cell 5, which takes up the first bearing 7. The angular encoder 11 is arranged between the first bearing 7 and the second bearing 9. The angular encoder 11 is arranged on the load cell 5.

Indicated is also, that the first pedal 102 transfers an external force fe to the spindle 10. Further the spindle 10 transfers a first force f1 to the first bearing 7 and a second force f2 to the second bearing 9. Also, a first horizontal force fx1 and a second horizontal force fx2 are transferred from a chain 114 to a deflector blade 110.

The deflector blade 110 is mounted to the spindle 10. The first force f1 and the second force f2 are nearly perpendicular to the external force fe, the first force f1 and the second force f2. The external force fe, the first force f1, and the second force f2 act along a y-axis, as shown in Fig. 2. Forces working along the y-axis are vertical forces.

The first horizontal force fx1 and the second horizontal force fx2 act along an x-axis, as shown in Fig. 2. The first horizontal force fx1 and the second horizontal force fx2 act in a horizontal direction.

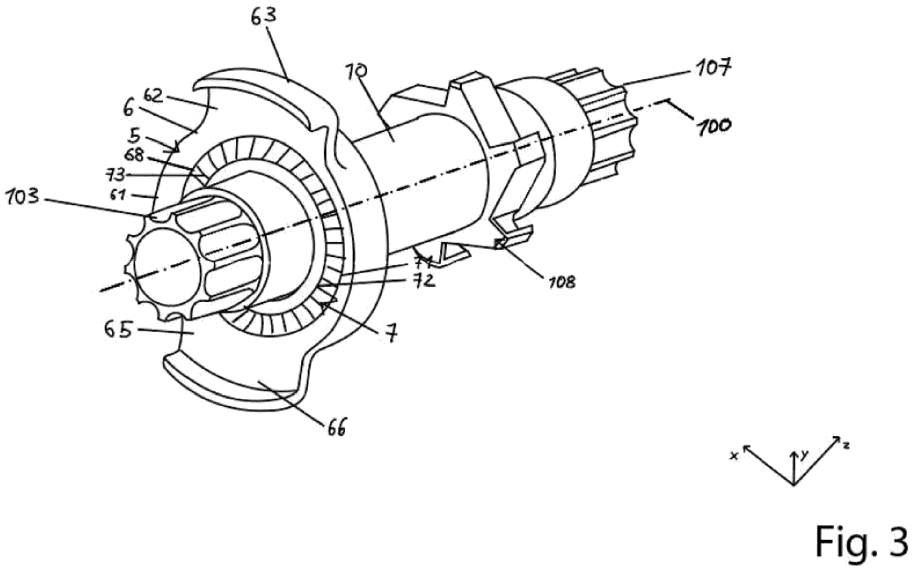

Fig. 3 shows the motor unit 1 as shown in Fig. 1 with a freewheel 108 in a view on a front side with the first end 103.

On one side of the first bearing 7, the spindle 10 comprises the first end 103. On the other side of the first bearing 7, the spindle 10 comprises the freewheel 108 and the second end 107. The freewheel 108 is a roller freewheel 108. A star of the freewheel 108 has a form-locked connection to the spindle 10.

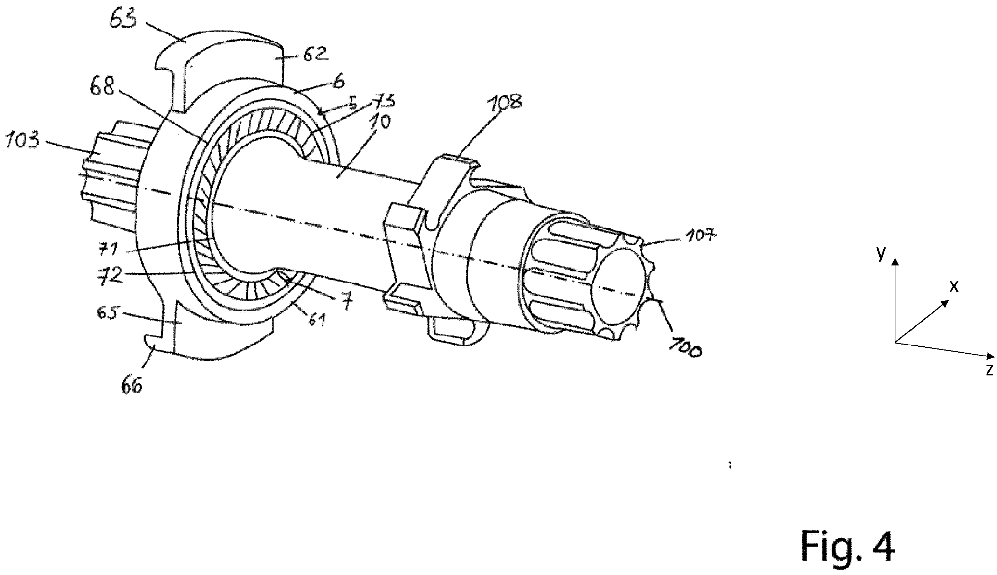

Fig. 4 shows a motor unit 1 as shown in Fig. 3 with the freewheel 108 in a view on a backside with a second end 107.

The freewheel 108 comprises a freewheel 108 clutch. The freewheel 108 clutch has spring-loaded rollers, which are not shown here, inside a driven cylinder, which is not shown here. A star of the freewheel 108 clutch is arranged on the spindle 10. At least one of several parts of the star has on one side a slant. On the other side, one part of the star has an edge in radial direction to the spindle 10. The edge is next to the spindle 10. A proximal edge is tangentially arranged to the spindle 10. A cover covers the front side of the freewheel 108. Each part of the star comprises next to the radial side a notch. The notch is arranged on the averted side from the slant.

In another embodiment, the freewheel 108 is a clamping freewheel 108. The clamping freewheel 108 comprises at least two saw-toothed, spring-loaded discs pressing against each other with the toothed sides together, somewhat like a ratchet. Rotating in one direction, the saw teeth of the drive disc lock with the teeth of the driven disc, making it rotate at the same speed.

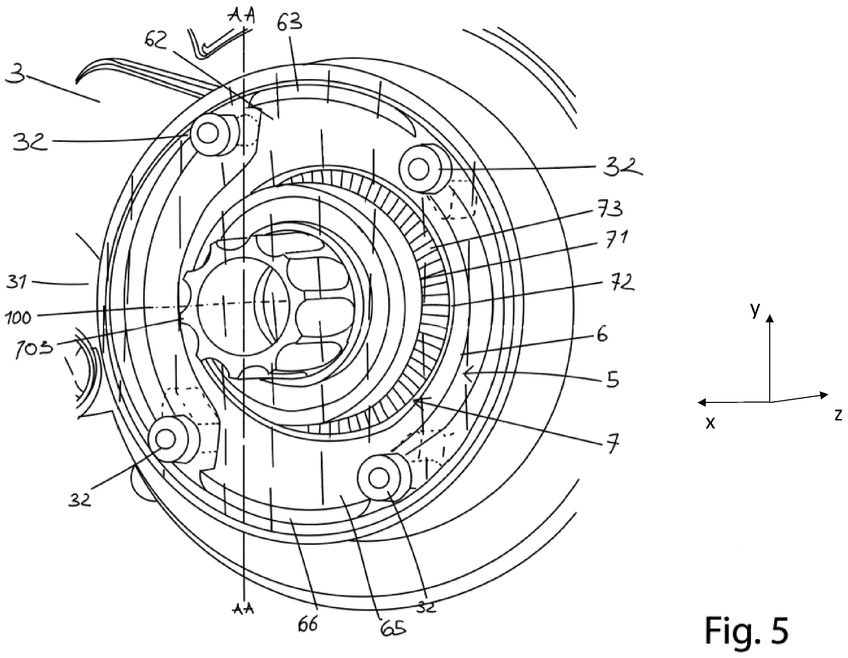

Fig. 5 shows a motor unit 1 as shown in Fig. 4 with a motor housing 3, taking up the external force measurement unit 4 with the load cell 5 and the spindle 10.

The motor housing 3 is taking up the motor unit 1. The motor unit 1 is mounted to the motor housing 3 through a holding plate 31 with four screws 32. The holding plate 31 is holding the first flap end 63 and the second flap end 66. The first flap end 63 and the second flap end 66 is clamped between the motor housing 3 and the holding dish 31 through the screws 32. Due to the clamping of the first flap end 63 and the second flap end 66 each flap 62, 65 is also fixed.

Due to the fixing of each flap 62, 65 the load cell 5 with the first bearing support 6 and the support ring 61 is fixed in a load cell carrier seat 51, which is not shown here, of the motor housing 3. The motor housing 3 is also comprising a support bearing seat, which is not shown here, to mount the second bearing 9, which is also not shown here.

The spindle 10 comprises the first end 103, which is pointing away from the motor housing 3.

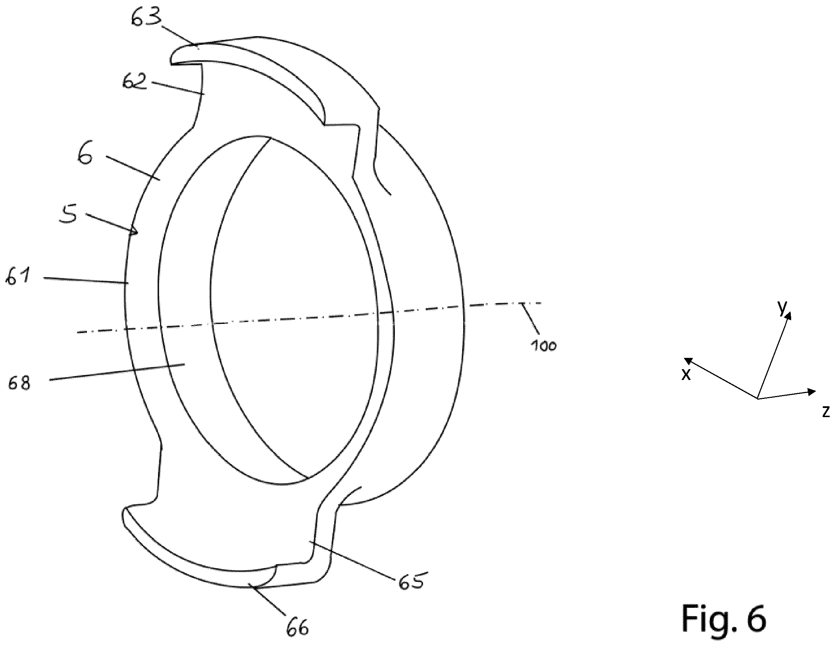

Fig. 6 shows the load cell 5 in a front view from the first end 103 of the spindle 10 as shown in Fig. 3.

An edge between the support ring 61 and the first bearing seat 68 is rounded off.

Each flap 62, 65 has less than half a size of the support ring 61 in direction of the spindle 10 symmetrical axis 100. One side in direction of the spindle 10 symmetrical axis 100 of each flap 62, 65 is arranged on a same plane as the support ring 61. The opposite side is connected to the support ring 61 through a smooth connection.

Each flap end 63, 66 are arranged on a proximal end to the support ring 61. The flap end 63, 66 are curved in nearly the same shape as the support ring 61. Edges of each flap end 63, 66 are rounded off. The flap ends 63, 66 are pointing towards the front side of the load cell 5. The flap ends 63, 65 have nearly a same width as each flap 62, 64.

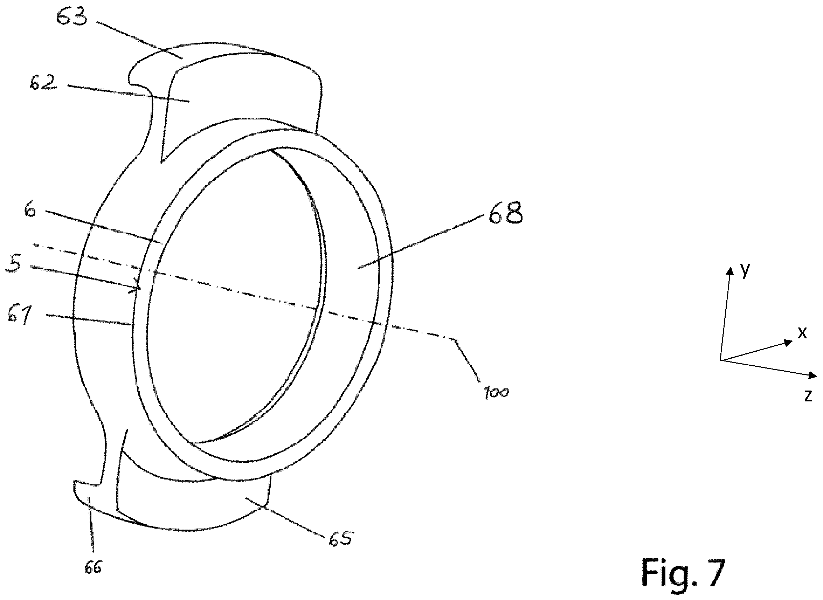

Fig. 7 shows the load cell 5 in a back view from the second end 107 of the spindle 10 as shown in Fig. 4.

The support ring 61 relates to a leading edge to the first bearing seat 68. The leading edge is arranged inside the first bearing seat 68.

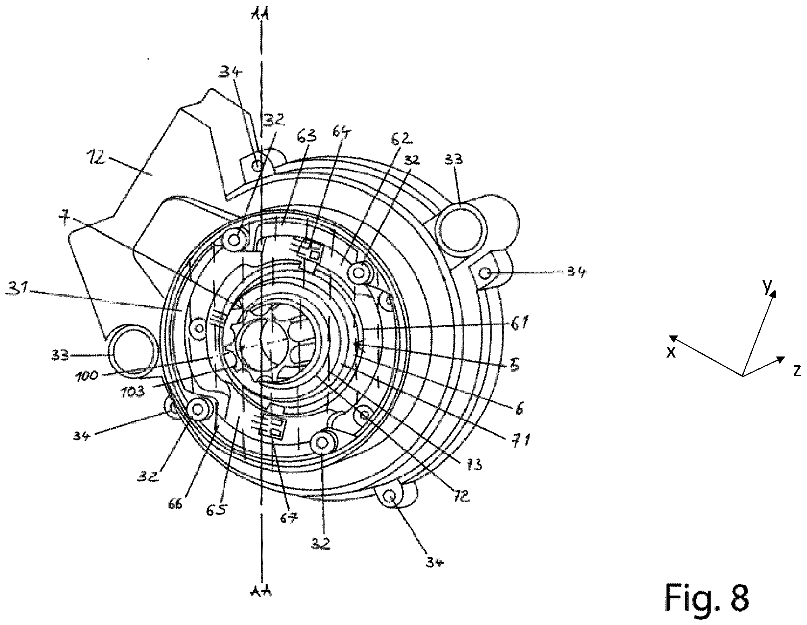

Fig. 8 shows a motor unit 1 with a motor housing 3 as shown in Fig. 5 with first fastening elements 33 and second fastening elements 34.

The first fastening elements 33 and the second fastening elements 34 are arranged on an outside of the motor housing 3.

The first fastening elements 33 and the second fastening elements 34 are used to mount the motor housing 3 to a bike rail, which is not shown here.

The first two fastening elements 33 are arranged on opposite sides of the motor housing 3. One of the two first fastening elements is arranged next to the outside of a battery holder 12 of the motor housing 3.

The second fastening elements 34 are arranged in a rectangle shape. One of the four second fastening elements 34 is arranged next to the first fastening element 33, which is positioned on the opposite side of the first fastening element 33, which is next to the battery holder 12.

The first fastening elements 33 have a bigger diameter than the second fastening elements 34.

The battery holder 12 is also part of the motor housing 3. The battery holder 12 is arranged on the perimeter of the motor housing 3 between both first fastening elements 33.

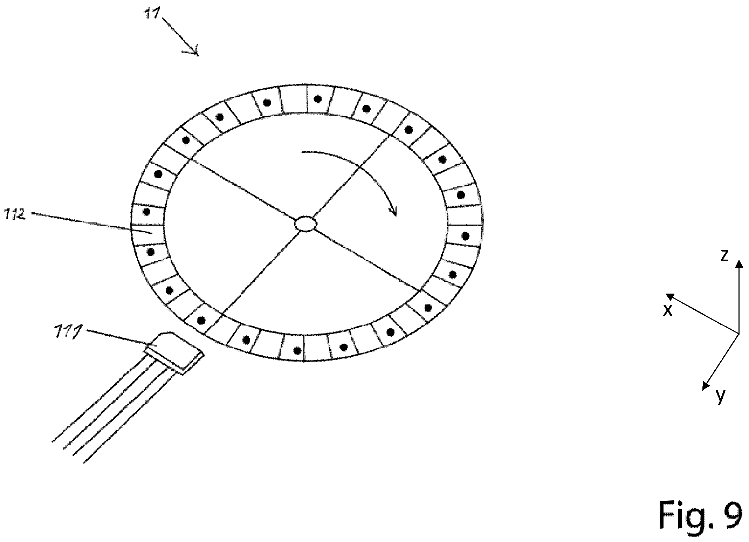

Fig. 9 shows the angular encoder 11 comprising a hall sensor 111 and a magnetic ring 112.

The magnetic ring 112 comprises 72 north poles and 72 south poles. The north poles and the south poles are alternating on the magnetic ring 112. A change from one pole to the pole is equal to a 2.5° Degree change of position of the magnetic ring 112.

While the magnetic ring 112 is rotating and the hall sensor 111 is in a fixed position the poles are alternating. The hall sensor 111 measures a magnetic field. The hall sensor 111 detects the change of the magnetic field. So, each switch from south pole to north pole and the other way around is detected. The magnetic ring 112 is arranged to the spindle 10. Depending on the change of position of the magnetic ring 112 relative to the hall sensor 111 a change of position of the spindle 10 is detected.

In an embodiment the angular encoder 11 is an on-axis magnetic encoder. An on-axis magnetic encoder uses a specially magnetized 2 pole neodymium magnet 300 attached to the motor shaft. Because it can be fixed to the end of the shaft, it can work with motors that only have 1 shaft extending out of the motor body.

In a further embodiment a hull of the spindle 10 is comprising in a cross view a tooth shape. The hall sensor 111 can be arranged direct above the tooth shape. Due to rotating of the spindle 10 a hill and a valley of the tooth shape are alternating crossing the hall sensor 111. Changing from a hill to a valley and the other way around, the magnetic field changes.

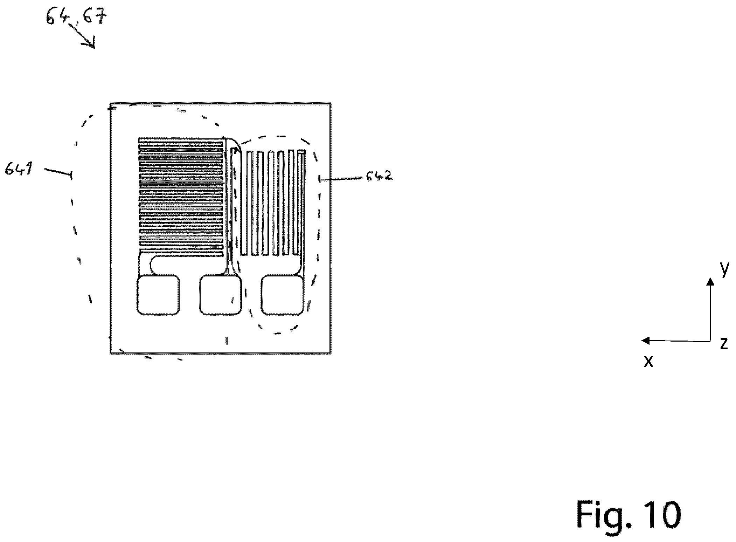

Fig. 10 shows the strain gauge 64, 67 as shown in Fig. 1.

As shown in Fig. 10 each strain gauge 64, 67 comprises a vertical strain gauge and a horizontal strain gauge. For measuring the change of length of each flap 62, 65 only the vertical part 641 of each strain gauge 64, 67 is used. The fist horizonal part of each strain gauge 64, 67 is used to measure a change of length due to a temperature change. This determined temperature change is used later to calculate a drift compensation.

Each strain gauge 64, 67 is part of a Half-bridge circuit. For example, a voltage of 36 Volt is connected to each outer end of the strain gauge. Due to a change of each resistances the relationship between the voltage drops in the first part 641 and the second part 642. Depending on this relationship, a resistance of each part 641, 642 is calculated.

Further, each flap 62, 65 transfers the first force f1 to each flap end 63, 66. The flap end 63, 66 transmits each part of the first force f1 to the load cell seat 68 of the motor housing 3, where the load cell 5 is taken up.

Additional to the first strain gauge 64 and the second strain gauge 67 the motor unit 1 also comprises the angular detector 11. The angular detector 11 is attached to the load cell 5 to detect a change of position of the spindle 10 relative to the spindle 10 symmetrical axis 100. The hall sensor 111 of the angular detector 11 has a fixed position relative to the magnetic ring 112 and detects a change of the magnetic field from the magnetic ring 112, which is connected to the spindle 10. A change in position of the magnetic ring 112 indicates a change in position of the spindle 10. Further the magnetic ring 112 comprises a first marker and the spindle 10 comprises a second marker. In case that, the angular encoder 11 detects the absolute position, it is required to match the first marker with the second marker while assembly.

Depending on the change of position of the spindle 10, a relative position of the first pedal 102 crank 101 is determined through the evaluation unit 14 . Depending on a position calibration of the spindle 10 the absolute position of the spindle 10 is determined. Due to the absolute position of the spindle 10, an absolute position of the first pedal crank 101 is determined. Depending on the absolute position of the first pedal crank 101 a position of the pedal 102 relative to the spindle 10 is calculated.

Considering that, the external force fe is acting to the pedal 102 mainly when the first pedal 102 is more in positive x-direction than the spindle 10, it is determined on which pedal the external force fe is acting on.

Depending on a ratio of the first force f1 and the second force f2, the evaluation unit 14 determines a signal that is related to the external force fe.

The external force fe is applied alternating between each pedal 102, 106. The force fe is mainly applied to the pedal 102, 106, which is moving downwards in the negative y-direction.

The first strain gauge 64 and the second strain gauge 67 are designed as two-axis strain gauges. A two-axis strain gauge is measuring a change of length in one first direction with a second part 642 of the two-axis strain gauge 64, 67. The two-axis strain gauge is also measuring a change of length in a second direction, which is perpendicular to the first direction with a first part of the two-axis strain gauge 64, 67.

Just in case the first strain gauge 64 is used as shown in Fig. 1, only the first part 641 is used to measure a change of length of the first flap 62 between the support ring 61 and the first flap 62 end 63.

Just in case the second strain gauge 67 is used as shown in Fig. 1, only the first part 642 is used to measure a change of length of the second flap 65 between the support ring 61 and the second flap 65 end 66.

The first part 641 of the first strain gauge 64 and the first part 642 of the second strain gauge 67 are measuring a change of length in a y-direction, as shown in Fig. 10.

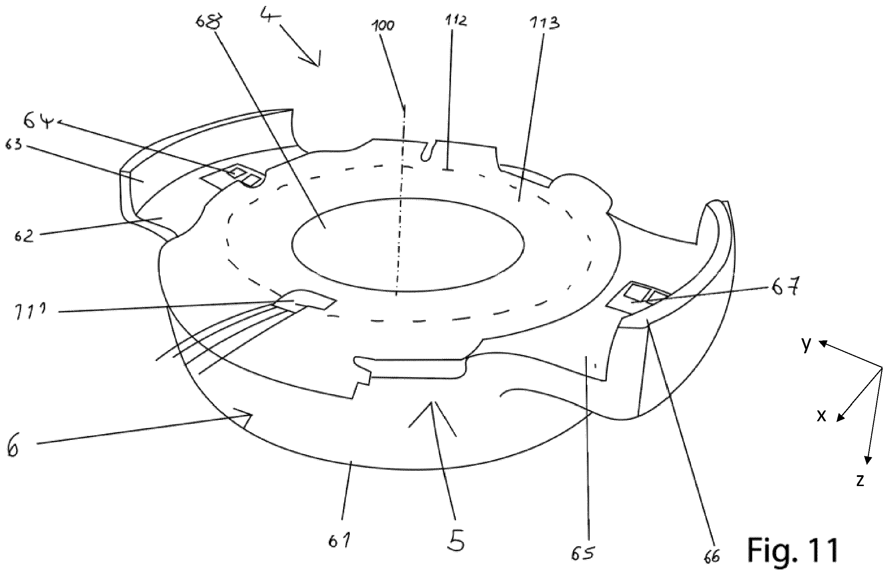

Fig. 11 shows the external force measurement unit 4 assembled with the hall sensor 111 of the angular detector 11 in a front view.

The magnetic ring 112 and the hall sensor 111 of the angular detector 11 are arranged on the front side, as shown in Fig. 6. The magnetic ring 112 is arranged on the support ring 61 of the bearing support 6. The magnetic ring 112 is rotatably arranged. The hall sensor 111 is fixed. The hall sensor 111 is arranged to detect the change of the magnetic field from the magnetic ring 112.

A plastic cover 113 is covering the magnetic ring 112. The plastic cover 113 has a notch. The hall sensor 111 is arranged in the notch.

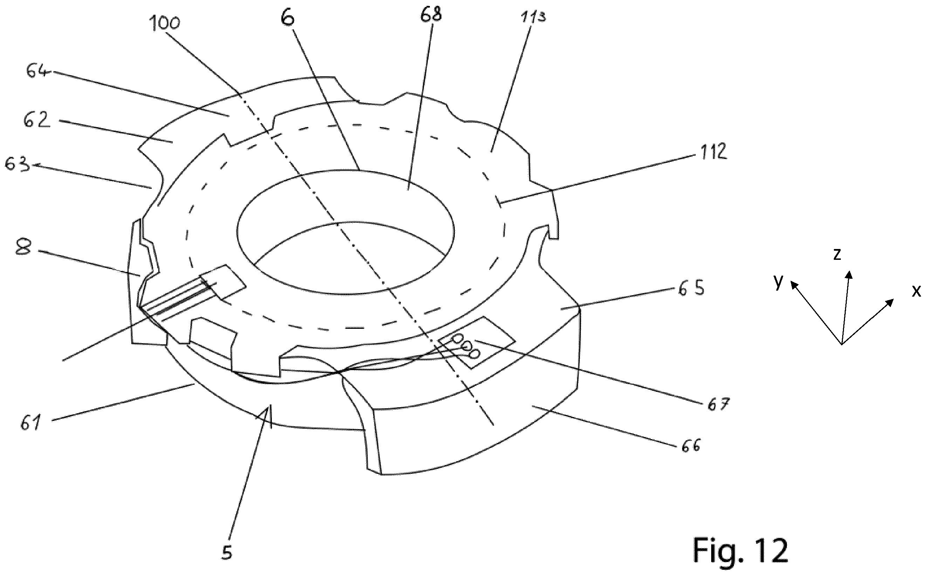

Fig. 12 shows the external force measurement unit 4 assembled with the hall sensor 111 of the angular detector 11 in a back view.

The magnetic ring 112 and the hall sensor 111 of the angular detector 11 are arranged on the backside, as shown in Fig. 7. Also, the first strain gauge 64 and the second strain gauge 67 are arranged on each backside of the flap 62, 65.

The evaluation unit 14 is attached to the load cell 5. The evaluation unit 14 is connected to the first strain gauge 64, the second strain gauge 67 and the hall sensor 111.

The magnetic ring 112 is arranged on a backside of the support ring 61. The hall sensor 111 is fixed. The hall sensor 111 is arranged to detect the change of the magnetic field from the magnetic ring 112.

A plastic cover 113 is covering the magnetic ring 112. The plastic cover 113 has a notch. The hall sensor 111 is arranged in the notch.

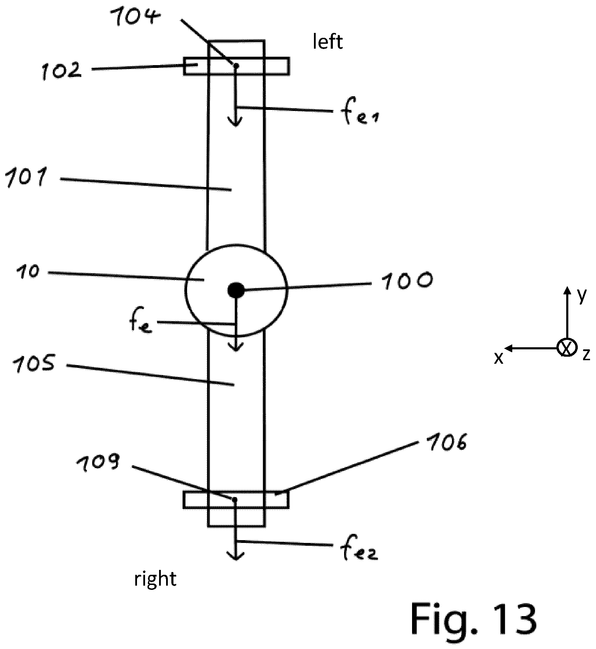

Fig. 13 shows schematically the spindle 10 with the pedals 102, 106 and the pedal cranks 101, 105 in a vertical position while a first external force fe1 acts on the first pedal 102 and a second external force fe2 act on the second pedal 106 in a side view. The load cell 5 with the first ball bearing 7 is not shown here.

In an embodiment the pedal cranks 101, 105 are in a vertical position. The vertical direction is along the y-axis. The first pedal 102 transfers the first external force fe1 through the first pedal crank 101 to the spindle 10. The second pedal 106 transfers the second external force fe2 through the second pedal crank 105 to the spindle 10.

The first external force fe1 and the second external force fe2 are part of the external force fe, which acts on the spindle 10. Each external force fe1, fe2 is acting in the same vertical direction.

Fig. 14 shows schematically the spindle 10 with the pedals 102, 106 and the pedal cranks 101, 105 in a horizontal position in a side view. The load cell 5 with the first ball bearing 7 is not shown here.

In an embodiment, the pedal cranks 101, 105 are in a horizontal position. The first external force fe1 acts on the first pedal 102 - on the left side of the ebike - and the second external force fe2 acts on the second pedal 106, on the right side of the ebike. Each pedal transfers the external force f1 and f2 through each corresponding pedal crank 802, 105 to the spindle 10. Each external force fe is acting in the same vertical direction. The first external force fe1 and the second external force fe2 are part of the external force fe, which acts on the spindle 10. Each external force fe1, fe2 is acting in the same vertical direction.

The position in Fig. 14, with the left pedal 102 facing towards the front of the ebike, defines the 0 degree ("zero") position. Positive angle values measured by the encoder represent a pedaling of the rider in a forward direction.

Fig. 15 shows in a graph two typical signals 201, 202 of the measured resistances of each strain gauge 64, 67 mapped to each pedal 102, 106. The strain gauges are set up in half-bridge configuration, with temperature compensation, such that the resistances of those segments 641, 642 of the strain gauges in Fig. 10 that are aligned with the direction of the intended force measurements are translated into voltages that are then digitalized.

The graph is presented in the form of a line diagram. On the y-axis is the measurement voltage plotted and on the t-axis is the time plotted. If the cadence of the pedaling is constant then the t-axis also represents the angle of the spindle 10, as measured by the encoder.

The first signal 201 shows a course of the resistance of the strain gauge 67, in an inverted manner. Low voltage values represent high pressure forces in the measurement direction. That means that the individual force on the left pedal which is measured by the force on the measurement module 5 is directed downwards if the voltage of the strain gauge 67 goes downwards, see Fig. 2.

The second signal 202 shows a course of the resistance of the strain gauge 64, in an inverted manner. Low voltage values represent high pressure forces in the measurement direction. That means that the individual force on the right pedal which is measured by the force measurement module 5 is directed downwards if the voltage of the strain gauge 64 goes downwards, see Fig. 2.

Two periods p1 of the first signal are plotted. The first signal 201 has the first period p1 and a first amplitude a1. The first signal 201 is nearly a sinus function.

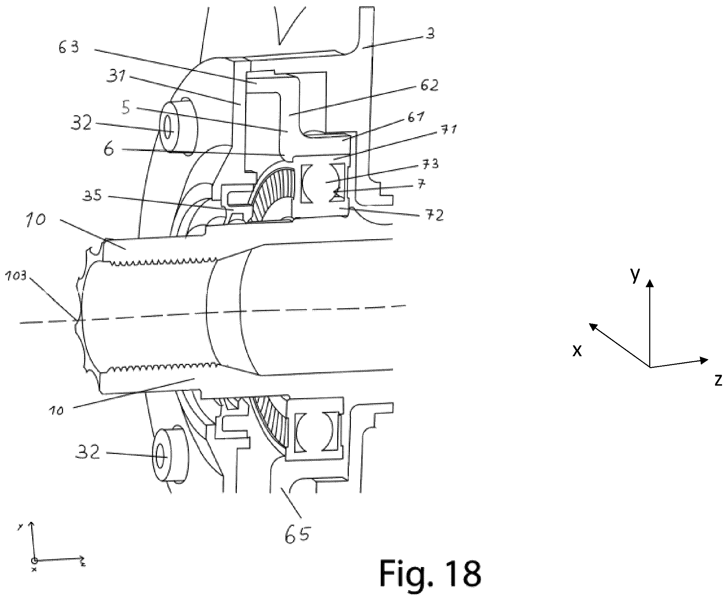

The second signal 202 shows a course of the resistance of the strain gauge 64. Two periods p2 of the first signal are plotted. The second signal 202 has a second period p2 and a second amplitude a2. The second signal 202 is not following a sinus function, but it has at its maximum a "plateau". The plateau takes nearly half of the length of the second period p2. This "plateau" is caused by the first flap end 63 being completely detached from its seat in the motor housing 3, see Fig. 18. Such a detached situation leaves the strain gauge 64 in a stable state without further relaxation from the original mounted state. That translates into a more or less horizontal voltage over time while being detached.

As a consequence, that means that in the embodiment shown here, especially during the "plateau" time, but not necessarily always:
- the resulting force Fres on the load cell 5 is larger than the preload that is produced when mounting the load cell 5 into its seat in the motor housing 3 at the time of manufacturing the motor unit 1, the resulting force coming from the combined forces of the rider on the first (left) pedal 102 and on the second (right) pedal 106.
- the rider force on the right pedal 106 produces a smaller component of the resulting force Fres on the load cell 5 as compared with the component that is produced by the rider force on the left pedal 102, because of the lever distances between the contact area of the rider with the right pedal 106 and the first bearing 7 and the second bearing 9. The same applies to the contact force of the rider on the left pedal 102, just that the lever distances lever distances between the contact area of the rider with the left pedal 102 and the first bearing 7 and the second bearing 9 are different.
- as a further consequence, the rider force on the right pedal 106 produces a component of the resulting force Fres on the load cell 5 that is opposite or inverse as compared with the component of the resulting force on the load cell 5 that is produced by the rider force on the left pedal 10.
- as a still further consequence, the rider force on the right pedal 106 produces a component of the resulting force Fres on the load cell 5 even if the right pedal 106 travels from its lowest position to its highest position, because there is still a rider force on the right pedal 106, as the rider uses his right foot for stabilizing his body during that movement. The same applies to the interaction of the rider with the left pedal 102.

The rider force on the left pedal 102 produces a component of the resulting force Fres on the load cell 5 even if the left pedal 102 travels from its lowest position to its highest position, because there is still a rider force on the right pedal 102, as the rider uses his right foot for stabilizing his body during that movement.

In an embodiment not shown here, the load cell 5 is mounted with a strong pressfit into the motor housing 3, such that the first flap end 63 does not detach from its seat in the motor housing 3, even when the rider applies very strong pedaling forces on the pedals 104 and/or 106. The above described method even works in such situations with the measurement values of the strain gauges 64, 67 being used for calculating Fres.

That explains why in the present embodiment, there is a plateau in the voltage 202 but not in the voltage 201: while the resulting force on the load cell 5 for those situations where the rider asserts a force on the left pedal 102 is larger than the preload that is produced when mounting the load cell 5 into its seat in the motor housing 3 at the time of manufacturing the motor unit 1, the resulting force on the load cell 5 for those situations where the rider asserts a force on the right pedal 106 is NOT larger than the preload that is produced when mounting the load cell 5 into its seat in the motor housing 3 at the time of manufacturing the motor unit 1.

This may be different in other situations with different designs of the motor unit 1.

The first period p1 and the second period p2 are nearly equal in a normal way of operating the ebike, with a constant cadence of the rider.

The base line 210 represents a saturation of the strain gauge 64 and of the strain gauge 67.

The maximums of each signal 201, 202 are arranged on the baseline 210. Additional to the shift in y-direction each signal 201, 202 has an offset o1. The offset o1 corresponds to a shift between the baseline 210 and the zero-point.

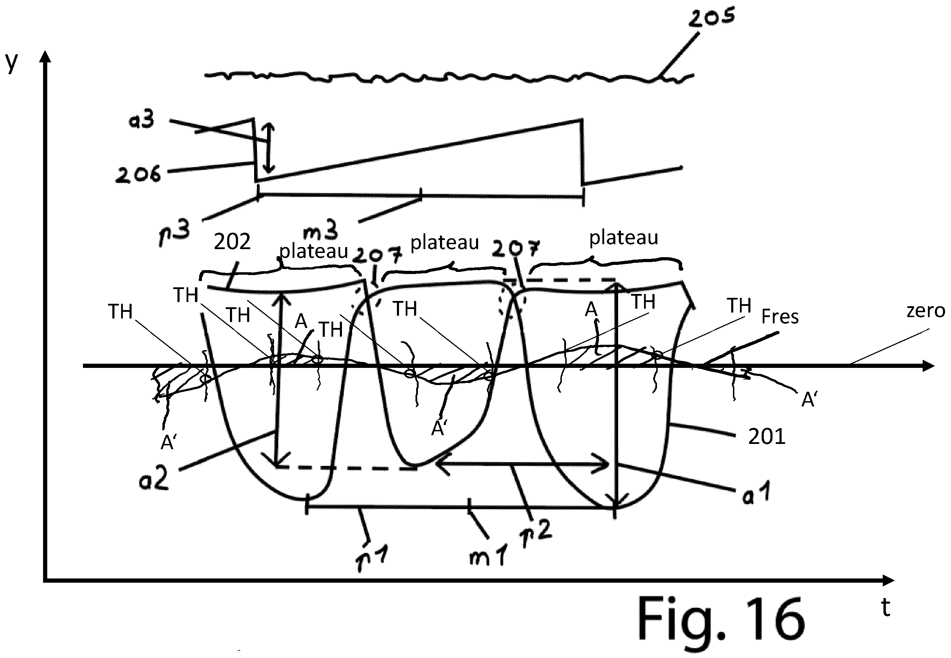

Fig. 16 shows in a graph of a typical signal of the resistances mapped to each pedal 102, 106 for a low cadence without motor support, with the rider applying a relatively high pedaling torque by his feet engaging with the pedals 102, 106.

In the present embodiment, a hall sensor signal 205 shows the changing of the magnetic field measured with the angular detector 11, which is not shown here. Each change of the hall sensor signal 205 corresponds to a change of the magnetic field due to a change of the detected poles of the magnetic ring 112, which is not shown here.

A ramp function 206 shows the calculated relative position of the spindle 10. The ramp function 206 is calculated based on the hall sensor signal 205. A middle m3 of a ramp period p3 is arranged on nearly the same x-position as a middle m1 of the first period p1. Also, the minimum of the second signal 202 is nearly on the same x-position as the middle m1 of the first period p1.

In other embodiments that are not shown here, there are other methods used for determining the relative position of the spindle 10. Examples are incremental encoders of any kind, such as optical encoders, resistance encoders, and others.

Each one of the signals 201, 202 has a plateau on its maximum, different from the situation which is described in Fig. 15. The reason therefor being that the rider applies higher forces as in the example of Fig. 15 which causes not only one flap end 63 but both flap ends 63 and 66 to be lifted from their respective seats in the motor housing 3, at different times.

The evaluation unit 14 is configured to measure the external forces fe1 and/or fe2, or the amount of power that the electric motor 2 applies to the motor unit 1, based on the resistance of the first strain gauge 64 and/or the resistance of the second strain gauge 67, or based on the electric voltages 201 or 202, which are the inverse of these resistances, see above. This is done by executing the following steps.
1. we do not measure whether it is a signal that is related to fe1 or fe2 that causes the motor control unit to make the electric motor 2 to apply power to the motor unit 1, because a signal that is related to the resulting force Fres on the load cell 5 is measured, which is caused by its components fe1 and fe2.
2. The shape of the signal Fres that is related to the resulting force Fres over time is more or less a sinus shape, with an offset in y-direction. The curve Fres in Fig. 16 is augmented by applying adjustment factors to the measurements of fe1 and fe2 that take into account that Fres - for the given embodiment with the chain blade on the right side of the ebike - for the position of the spindle 10 shown in Fig. 14 is larger than Fres for the equivalent position of the spindle 10, but with the left pedal 104 facing backwards and the right pedal 106 106 facing backward. This is because of the lever arrangement of the spindle 10 in the bearings and the distances to the pedals, as described above. In the present embodiment, the curve Fres is adapted such that the positive amplitudes and the negative amplitudes over time are about equal. That is achieved by applying factors to the computation of the measurements of Fe1 and Fe2.
3. The amplitude of the signal that is related to the resulting force Fres over one revolution of the spindle 10 is a direct equivalent of the total force that the rider applies to the spindle 10. This is why Fres is a useful signal for determining the amount of power that the electric motor 2 should apply to the motor unit 1, in order to create a comfortable riding experience. The signal that that is related to the resulting Force Fres is a useful measurement value for the motor control unit because it represents the total force that the rider puts into the spindle for propulsing the ebike, whereby differences in the riders force into the two pedals 102 and 106 are combined and balanced out to a single measurement value. That comes with seperately measuring the resistances of the two strain gauges 64 and 67 and only later combining them in further evaluation steps in the motor control unit 14 that determine the amount of power that the electric motor 2 should apply to the motor unit 1. That works in one very simple form even without providing an encoder signal for the position of the spindle 10 to the motor control unit because it is in this simple case sufficient to evaluate the periodic time of Fres, and a) to apply motor power to the drive unit whenever of Fres is larger than a pre-defined threshold TH and b) to not apply motor power to the drive unit whenever Fres is smaller than a pre-defined threshold TH. In some embodiments, one looks at the the absolute value of Fres and whether or not is is larger than the threshold FH. For clarification purposes, the hatched areas A, A' in Fig. 16 represent the times when the electric motor 2, based on the measurement of the resulting force Fres, will be required to provide power to the motor unit 1.
4. One can determine the "zero" line of Fres by calculating the average of Fres over at least one revolution of the spindle 10. This is relatively simple if the axle position is known by an additional encoder value as mentioned above. If the axle position is not available by providing an additional encoder value, then more calculation work is required for determining the rotational spindle position, for example by determining the "zero to zero" transitions of Fres (equivalent to the vertical position in Fig. 13), done over a few revolutions of the spindle 10, or by using the "max to max" values of Fres (equivalent to the vertical position in Fig. 14), done over a few revolutions of the spindle 10. Still one has to determine the absolute position of the spindle 10, for example by determining whether the left pedal 104 or the right pedal 106 is facing forward in Fig. 14, if even better control of the electric motor 2 is required. This can be achieved with an encoder that gives an absolute position of the spindle, or with an algorithm that determines which absolute value of Fres - before correcting the amplitude over time as described above or after that correction - is negative or positive. In Fig. 16, if Fres is negative (at a minimum or close to it) with respect to "zero" that means that the right pedal 106 in Fig. 14 is facing forward and the left pedal 104 is facing backward. If Fres is positive (at a maximum or close to it) with respect to "zero" that means that the right pedal 106 in Fig. 14 is facing backward and the left pedal 104 is facing forward.
5. Different from step 3 above, instead of using the threshold values TH, one can calculate an average value of Fres and use this average value of Fres for making the electric motor 2 applying a small constant torque component to the motor unit 1, and for - after rectifying Fres to Fres' by inverting the negative areas A' from negative areas as shown in Fig. 16 to positive areas - making the motor 2 to supply an additional small power component to the motor unit 1, when this altered curve Fres' is larger than a threshold TH. This makes the electric motor 2 applying power to the spindle 10, even when the rider cannot apply a torque to the axle 10, for example when the cranks 101, 105 are positioned vertically, as shown in Fig. 13.
6. The steps 3, 4, and 5 work even if no encoder signal is used for controlling the electric motor 2. That can lead to situations when the electric motor 2 supplies power to the motor unit 1 when the rider does not want that. This is why one can alter the steps 3, 4 and 5 by using the rotational position of the spindle 10 and its current change over time for deciding whether or not the electric motor 2 is made to apply torque to the motor unit 1. A simple variant is given by an encoder that provides an absolute position of the spindle 10 because then situations can be easily determined when no extra torque should be provided by the electric motor 2, e.g. the rider keeps the cranks 101 and 105 in the horizontal position of Fig. 14 over an extended amount of time, or in the vertical position of Fig. 13 over an extended amount of time. That extra encoder information is much more accurate and faster available for determining what the rider is currently doing, as compared with determining the same from the signals of the two strain gauges 64 and 67 alone. Further improvements can be achieved if the decision of whether or not the electric motor 2 is made to apply torque to the motor unit 1 is made based on a current angular speed of the spindle 10, measured by a change of the encoder signal over time. The rear wheel 375 has a rear sprocket 376 that is driven by the chain 114. The chain force Fk is caused by the driving side 370 of the chain 115.

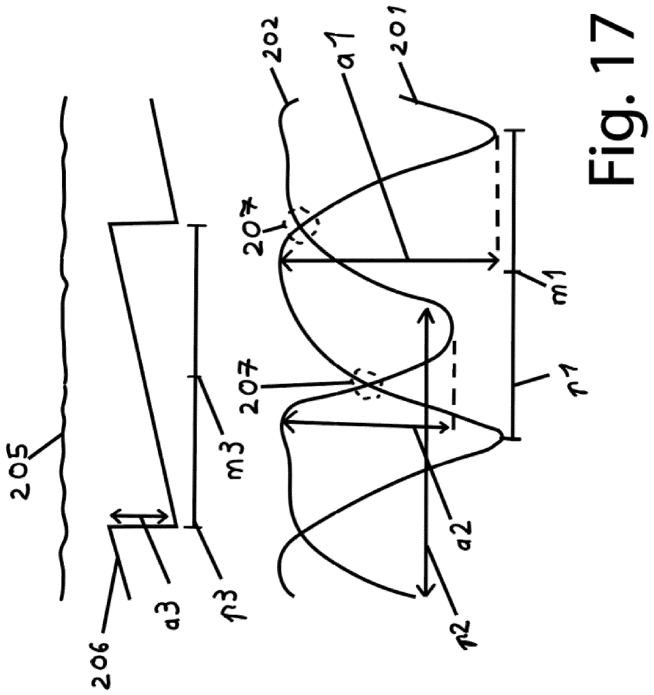

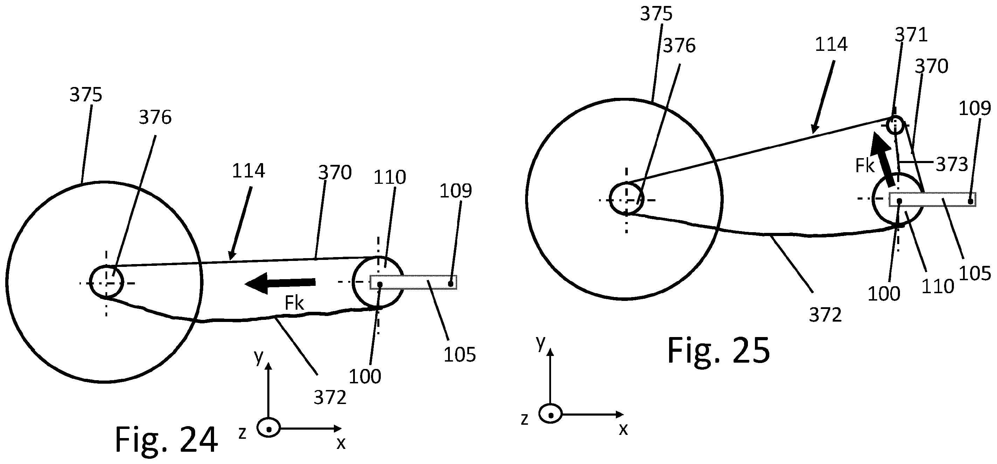

Fig. 17 shows a graph of a typical signal that represents the resistances of the strain gauges 64 and 67 as described above, mapped to the movement of the pedals 102, 106, for a very high cadence and without electric motor 2 support. In the present embodiment, with an essentially horizontally arranged driving side 370 of the chain 114 on the chain wheel 110, see Fig. 24, and because essentially only vertical forces are measured by the load cell 5, because of the inherent structure of the motor unit 1, the signals 202 and 201 are not very different from the state where the electric motor 2 provides power to the motor unit 1. The trailing side 372 of the chain 114 leads the chain back to the chain blade 110.

In another embodiment which is shown in Fig. 25, with an almost vertically arranged chain 114 on the chain wheel 110, the essentially vertically arranged driving side 370 causes vertical chain forces on the sprocket carrier 340 and on the spindle 10, the vertical forces which are measured by the load cell 5 are influenced by the almost vertical chain forces Fk that are cause by guiding the chain 114 over a pulley 371 at the bicycle frame 373. Because of its inherent structure, the signals 202 and 201 - when pedaling without support by the electric motor 2 - are different from the state where the electric motor 2 provides power to the motor unit 1. The chain forces Fkcan be calculated from the extra torque that the electric motor 2 causes on the sprocket carrier 340 and chain blade 110, and the influence of the almost vertical chain forces Fk can be compensated in the vertical forces which are measured by the load cell 5, by the motor control unit 14.

In Fig. 17, the course of the first period p1 and the second period p2 and their position relative to each of them is different from Fig. 16. Compared to Fig. 16, the first signal 201 and the second signal 202 are shifted to the right such that the control unit would derive that the pedal position when the minimum and maximum values of the first signal 201 and the second signal 202 are detected. The control unit detects the pedaling frequency of the spindle 10 and applies a correction value to achieve a timeshift of the first signal 201 and the second signal 202 by adding a negative phase angle to or by subtracting a positive phase angle from the first signal 201 and the second signal 202.

This phase shift has various root causes, among others the delay in the signal processing chain between the load cell 5, the motor control unit, and the electric motor 2. Another reason is that riders, when pedaling fast, apply pedal forces later as compared with a state when they pedal slow.

Fig. 18 shows a cross section view along the intersection line AA of the load cell 5 with the spindle 10 mounted in the motor housing 3 as shown in Fig. 8.

The motor housing 3 is cut along the intersection line AA as shown in Fig. 5 and 8.

The load cell 5 is arranged on the motor housing 3. Between each flap 62, 65 with each flap end 63, 66 and the motor housing 3 is a clearance in y-direction. In z-direction the load cell 5 is fixed with a holding plate 31. The holding plate 31 is fixed with screws 32. The holding plate 31 has a hole. The spindle 10 fits through the hole. The hole comprises a sealing lip 35 on its inner edge. The sealing slip protects the load cell 5 against environmental influences.

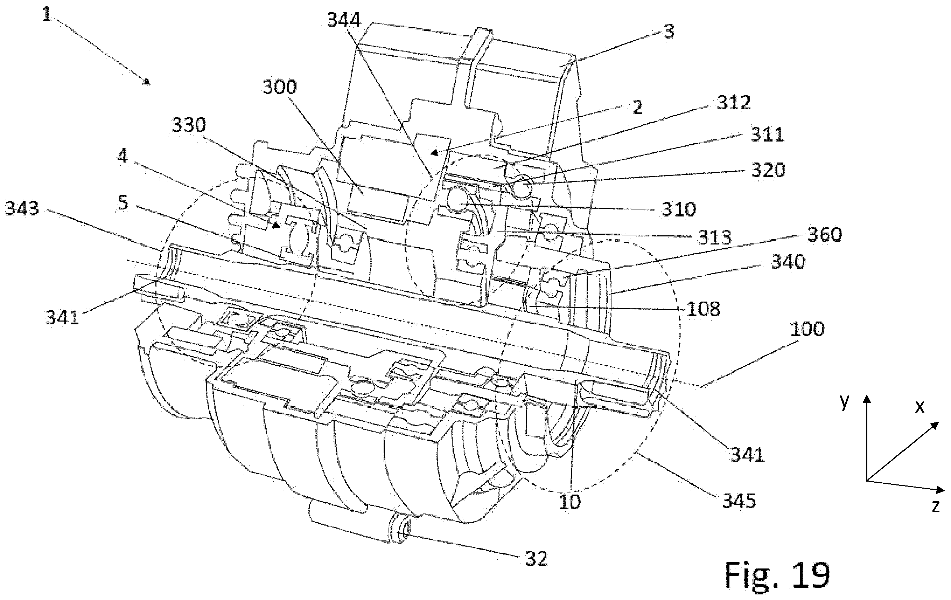

Fig. 19 shows a schematical section view of an electric drive in the form of the motor unit 1 with the electric motor 2 and a freewheel 108 between the spindle 10 and the sprocket carrier 340.

The motor unit 1 comprises the motor housing 3. The motor housing 3 comprises a third fastening element 32 to mount the motor housing 3 to a frame, which is not shown here. The motor housing 3 comprises three motor housing parts 343, 344, 345. A first motor housing part 343 comprises at least a gear housing and an external toothing. A second housing part 344 comprises at least the load cell 5. The third motor housing part 345 comprises at least an output to a chain 114 ring.

The motor housing 3 takes up a spindle 10. At one end of the spindle 10 the first bearing 7 takes up the spindle 10. The first bearing 7 is taken up by the first bearing support 6. The first bearing support 6 is part of the load cell 5. The load cell 5 is adapted to determine a torque, as described above. The third bearing 360 takes up another end of the spindle 10. The spindle 10 has a spindle symmetry axis 100. In particular, the spindle 10 and the electric motor 2 rotate around the spindle symmetry axis 100. In an embodiment the motor unit 1 comprises one spindle 10, in particular not more than one spindle 10 and at least not less than one spindle 10.

Further, the electric motor 2 is arranged inside the motor housing 3 of the motor unit 1. The electric motor 2 can be a DC- motor or an AC-motor. In particular, the electric motor 2 can be a brushless DC motor, an electronic commutator motor or a universal AC/ DC motor. The electric motor 2 can be an induction motor or a synchronous motor. In particular, the electric motor 2 can be a rotary motor.

A stator of the electric motor 2 is arranged on an outside of the rotor 330. The electric motor 2 can be a in-runner motor. The stator comprises windings.

The windings are wires that are laid in coils. The wires can be made of soft iron magnetic material. Magnets of the electric motor 2 are arranged between the windings and the rotor 330. In particular, the magnets are mounted to the rotor 330.

A transmitter bearing 310 takes up the rotor 330. The transmitter bearing 310 can be a roller bearing, in particular a rolling roller bearing or a ball bearing. A type of the transmitter bearing 310 is not limited to a specific bearing type. The transmitter bearing 310 transfers power from the rotor 330 to a pin-ring 311.

The transmitter bearing 310 is part of a harmonic pin ring gear system that has at least one inner ring 313 with outer teeth and at least one outer ring 312 with inner teeth, and a pin ring 311 with pins that have a circular cross-section and a rotor 330 with a transmitter bearing 310 for pushing the pins of said pin ring 311 into the teeth of said outer ring 312 and into the teeth of said inner ring 313. The transmitter bearing 310 deforms the pin ring 311 in such a way that the outer ring 312 and the inner ring 313 rotate relative to each other.

The outer ring 312 is mounted to an outer bearing 320. The outer bearing 320 transfers the power to a sprocket carrier 340. The sprocket carrier 340 can be mounted to a chain 114 ring, which is not shown here.

The sprocket carrier 340 is mounted through the freewheel 108 to the spindle 10. In particular, the motor unit 1 comprises only one freewheel 108. In other words, the motor unit 1 comprises exact one freewheel 108 and/or at least not more than one freewheel 108.

In case the electric motor 2 provides a first torque, which is greater than a second torque, which is applied to the spindle 10 through the pedal cranks 101, 105, the electric motor 2 amplifies the second torque. The first torque and the second torque sum up to a third torque. The third torque is outputted through the sprocket carrier 340 to the chain 114 ring, which is not shown here. The chain 114 ring transfers the third torque through the chain 114 for example to a wheel of a bicycle.

In case the second torque is bigger than the first torque, the electric motor 2 is decoupled from the spindle 10. The decoupling is performed by the freewheel 108. The decoupling can depend instead or additionally to the torque also from the revolutions per minute.

For example, if the revolutions per minute of the sprocket carrier 340 or the spindle 10 is bigger than the revolutions per minute of the electric motor 2, the electric motor 2 is decoupled from the spindle 10 by the freewheel 108. This means, in the above-mentioned case, the second torque has not to turn the electric motor 2. In the above-described case, the second torque is equal to the third torque.

In case the speed of the bike is greater than a threshold speed, the electric motor 2 can stop to amplify the second torque. In this case the electric motor 2 will also be decoupled from the spindle 10. This means the second torque can be equal to the third torque.

In case the spindle 10 is turning in an opposite direction as described above the spindle 10 is coupled to the electric motor 2. If the spindle 10 is turning in opposite direction the electric motor 2, in particular the rotor 330, turns with the same speed as the spindle 10. In particular, the electric motor 2 can turn backwards to support the spindle 10 turning in the opposite direction.

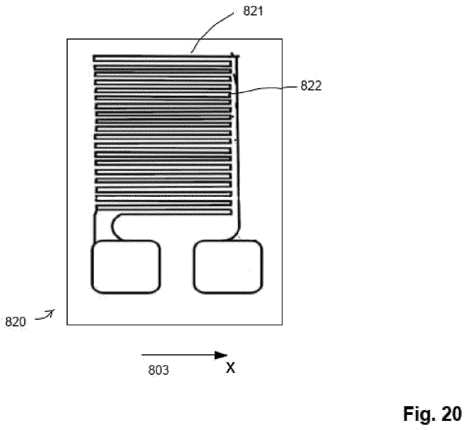

Fig. 20 shows a strain gauge 820 according to a different embodiment. In contrast to the strain gauge shown in Fig. 10, the strain gauge 820 of Fig. 20 has only one measurement direction 803. It measures a length change in the x-direction that is shown in Fig. 20, while it is nearly insensitive to a length change perpendicular thereto.

For that purpose, the strain gauge 820 has a plurality of electric lines 821 extending in the x-direction that change their resistance with a length change in x-direction. Perpendicular to that, the electric lines 821 are only connected by connecting portions 822 that are comparatively short and do not contribute substantially to the overall resistance.

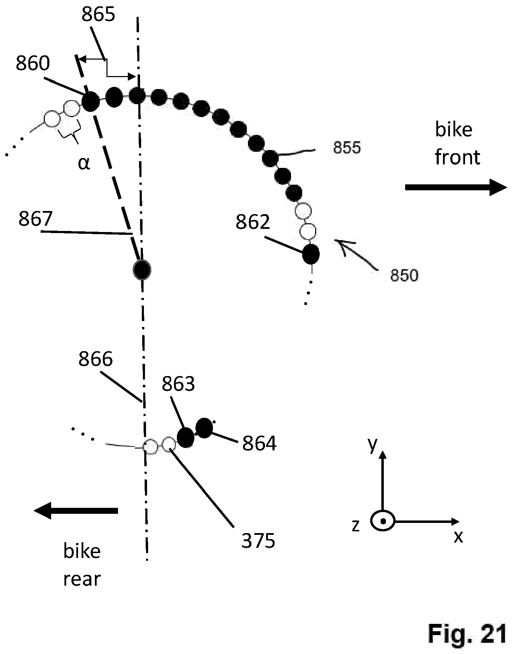

Fig. 21 shows a field 850 with a multitude of cells for entries 855 in a memory section of the motor control unit, for storing for a multitude of angular positions of the spindle 10 whether or not the load cell 5 receives any Fres at that angular position, which indicates a pedal force being applied on the right side of the spindle 10 at that angular position. The angular position of the spindle 10 is measured with an encoder 11 that can be an absolute encoder or an encoder that supplies relative changes α of the angle.

In the present embodiment, the field 850 has 144 values or cells 855, representing an angular step width of 2.5 degrees, of which only 21 cells are shown in Fig. 21.

The principle behind storing the measurement of Fres over the angular position of the spindle 10 is that the rider can apply pedal forces to the right side of the spindle 10, where the chain wheel 110 is located, only at those positions of the spindle 10 where the pedal is between +90 degrees and +270 degrees in Fig. 14. In all other positions, if the rider applies pedal forces to the to the right side of the spindle 10, the spindle 10 would rotate backwards with negative changes of α, because of the freewheeling device 108.

If the storing of values into the field 850 is done for multiple revolutions of the angle determining an angle of rotation. The field 850 comprises a plurality of entries 855, each entry 855 being represented by one circle-shaped field. Each circle is either "filled"/"black" or "empty"/"white". The status "filled" is provided if the corresponding Fres indicates a rider applying a positive pedaling force on the right pedal 106. The respective circle is "filled" if the measured resistance exceeds a threshold and is not filled otherwise. A filled circle thus corresponds to a "positive" entry and an empty circle corresponds to a "negative" entry which stands for "no corresponding Fres detected". The field is shown Fig. 21 along a path of a circle corresponding to one crank arm, for easier understanding.

If the crank arm is just left of a state in which it is directed straight upwards, it is physically impossible to have a positive entry when a driver of a bicycle has his feet on the pedals in a usual manner. Immediately after crossing the state with the crank facing straight upwards, the entries are positive due to the force exerted by the driver. If there is a sector of a predetermined number of consecutive entries that are positive, the beginning of that sector corresponds to the state with the crank facing straight upwards and this is used as an origin 860. This is indicated in Fig. 21, and one can see that there is a deviation 865 from what is the true vertical direction "x".

After having determined the origin 860, which stands for the right pedal 106 being in the vertical top position, opposite of what is shown in Fig. 13, the actual angle of rotation of the spindle 10 for the position of the pedal 106 can be determined relative to that origin 860 by counting the number of relative measurements α of the angular decoder.

For a more precise determination of the origin 860, the field 850 can filled only when the spindle 10 rotates with an essentially constant speed, and not when the rotational speed of the spindle 10 changes during the course of a predetermined number of revolutions, e.g. between one revolution and five revolutions.

In another embodiment, the field 850, after half of the cells being filled with "positive" flags - which represents that the correct alignment between the position of the right pedal 106 and the encoder 11 values has been identified, the field 850 can be deleted and filled with new measurements again. That enables an on-board diagnosis of the encoder 11 by the motor control unit because a faulty encoder would require a frequent recalibration which is output as an error code.

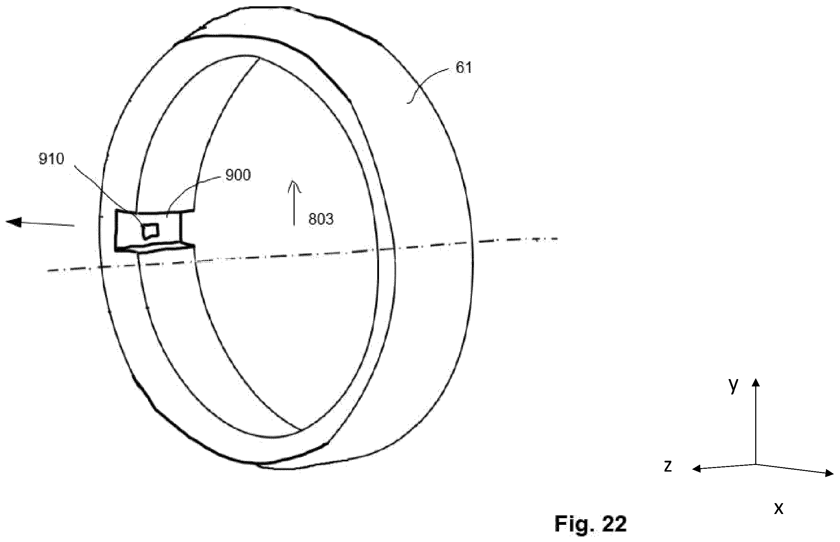

Fig. 22 shows a support ring 61 according to a different embodiment. The support ring 61 has a recess 900 at a vertical middle position. That recess is embodied at the inside of the support ring 61. Inside this recess 900, there is arranged a strain gauge 910 at a bottom of the recess 900 measuring a deformation at the position of the recess 900.

The recess is positioned such that a force exerted by a chain 114 surrounding the support ring 61 is measured. Such a force typically acts in one direction, namely at least approximately horizontally and thus deforms the support ring 61 such that this deformation can be measured by the strain gauge 900.

The strain gauge 900 can be embodied such that it has only one measurement direction 803, which is typically vertically. Alternatively, the strain gauge 900 can have two measurement directions, of which one should typically be oriented vertically, and one should be oriented along the horizontal middle axis shown in Fig. 22.

In the above-mentioned description, the first torque can be also understood as a first rotation speed, the second torque as a second rotation speed, and the third torque as a third rotation speed.

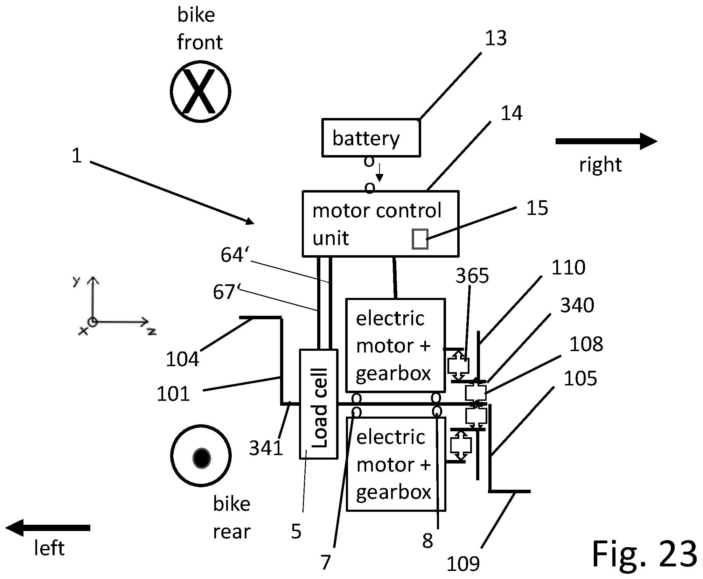

Fig. 23 shows a schematic view of an electric drive in the form of a motor unit 1 with a battery 13 and a motor control unit 14.

A first strain gauge signal line 64' connects the first strain gauge 64 with the motor control unit 14, while a second strain gauge signal line 67' connects the second strain gauge 67 with the motor control unit 14. The motor control unit 14 evaluates the first strain gauge 64 separate from the second strain gauge 67.

The motor control unit 14 supplies the electric motor 2 of the motor unit 1 with power from the battery 13, depending on the separate measurements of the first strain gauge 64 and the second strain gauge 67.

A computer software for controlling a microprocessor or a microcontroller (not shown here) that is provided in the motor control unit 14 is stored in a memory unit 15 of the motor control unit 14.

The battery 13 can be connected with and disconnected from the motor control unit 14 when using the ebike. That is shown with a little arrow symbol and two contacts "o" and "o" in Fig. 23. Th ebattery can be removed for charging purposes.

One method for manufacturing the motor unit 1 comprises the steps of
providing the electric motor 2 with the above described gearbox arrangement, the motor control unit 14, and the load cell 5,
connecting the electric motor 2, the motor control unit 14, and the load cell 5, providing and connecting the memory unit 15 with the motor control unit 14, thereby providing a product by manufacturing process,
wherein the memory unit 15 comprises a computer software for controlling a microprocessor or a microcontroller that is provided in the motor control unit 14 such that the above-described control of supplying electric power from an electric power source to the electric motor 2 is provided, based on the separate measurements of the first strain gauge 64 and the second strain gauge 67.

A further method for manufacturing the motor unit 1 comprises the steps of:
providing the electric motor 2 with the above described gearbox arrangement, the motor control unit 14, and the load cell 5,
providing the memory unit 15
connecting the electric motor 2, the motor control unit 14, the load cell 5, and the memory unit 15 with the motor control unit 14,
loading a computer software for controlling a microprocessor or a microcontroller that is provided in the motor control unit 14 into the memory unit 15, the computer software causing the motor control unit 14 to control the supply of electric power from an electric power source to the electric motor 2 based on the separate measurements of the first strain gauge 64 and the second strain gauge 67,
thereby providing a tangible product that is defined by a manufacturing process.

The loading of the computer software into the memory unit 15 can be done via a data cable (not shown here) by an external computer (not shown here), or in a wireless data transmission.

The control of the supply of electric power from an electric power source to the electric motor 2 chat comes with seperately measuring the resistances of the two strain gauges 64 and 67 and only later combining them in further evaluation steps in the motor control unit 14 that determine the amount of power that the electric motor 2 should apply to the motor unit 1.

That control of supply of power works in one very simple form - optionally even without providing an encoder signal for the position of the spindle 10 to the motor control unit - after adding the measurement signals of the resistances of the two strain gauges 64 and 67 - after multiplying these two signals with two factors - in order to determine a signal Fres. In a simple case it is sufficient to evaluate the periodic time of Fres, and a) to apply motor power to the drive unit whenever the value of Fres is larger than a pre-defined threshold TH and b) to not apply motor power to the drive unit 1 whenever Fres is smaller than a pre-defined threshold TH.

In some embodiments one looks at the the absolute value of Fres and whether or not it is larger than the threshold FH, the decision of whether or not applying motor power to the drive unit 1 whenever Fres is larger or smaller than a pre-defined threshold TH.

In another embodiment, the method comprises determining a "zero" line of the signal Fres by calculating the average of Fres over at least one revolution of the spindle 10. That makes applying of the threshold value TH more accurate for deciding whether or not applying motor power to the drive unit 1, whenever Fres is larger or smaller than a pre-defined threshold TH.

The method is relatively simple if the axle position is known by an additional encoder because then the timing of applying motor power can be synchronized with pedal positions of the bicycle when the rider is pedaling.

If the axle position of the spindle is not available by providing an additional encoder value, then more calculation work is required if one wants to determine the rotational spindle position, by determining the "zero to zero" transitions of the signal Fres (equivalent to the vertical position in Fig. 13), done over a few revolutions of the spindle 10, or by using the "max to max" values of Fres (equivalent to the vertical position in Fig. 14), done over a few revolutions of the spindle 10.

A further variant is to determine the absolute angular position of the spindle 10, for example by determining whether the left pedal 104 or the right pedal 106 is facing forward in Fig. 14, if even better control of the electric motor 2 is required. This can be achieved with an encoder that gives an absolute position of the spindle, or with an algorithm that determines which absolute value of Fres - before correcting the amplitude over time as described above or after that correction - is negative or positive.

Different from the step of using the threshold values TH, one can calculate an average value of Fres and use this average value of Fres for making the electric motor 2 applying a small constant torque component to the motor unit 1, and for - after rectifying Fres to Fres' by inverting the negative areas A' from negative areas as shown in Fig. 16 to positive areas - making the motor 2 to supply an additional small power component to the motor unit 1, when this altered curve Fres' is larger than a threshold TH. This makes the electric motor 2 applying power to the spindle 10 even when the rider cannot apply a torque to the axle 10, for example when the cranks 101, 105 are positioned vertically, as shown in Fig. 13.

One can improve the above control steps by using the rotational position of the spindle 10 and its current change over time for deciding whether or not the electric motor 2 is made to apply torque to the motor unit 1.

A simple variant is given by an encoder that provides an absolute position of the spindle 10 because then situations can be easily determined when no extra torque should be provided by the electric motor 2. That extra encoder information is much more accurate and faster available for determining what the rider is currently doing, as compared with determining the same from the signals of the two strain gauges 64 and 67 alone. Further improvements can be achieved if the decision of whether or not the electric motor 2 is made to apply torque to the motor unit 1 is made based on a current angular speed of the spindle 10, measured by a change of the encoder signal over time.

In a further embodiment, the spindle 10 is decoupled from the electric motor 2 such that
- the electric motor 2 cannot drive the pedals in whatever way, but still drive the sprocket carrier 340,
- the rider can drive the sprocket carrier 340 forward even if the electric motor 2 is not providing power to the motor unit 1, and
- the rider can drive the spindle 10 backward without driving the electric motor 2 backward.

There are two freewheeling devices, one freewheeling device 108 between the spindle 10 and the sprocket carrier 340 and one freewheeling device 365 between the inner ring 313 and the sprocket carrier 340:
the freewheeling device 108 prevents the motor unit 1 to rotate the spindle 10 forward, when the electric motor 2 drives the sprocket carrier 340, even if the spindle 10 stands still or rotates slower than the sprocket carrier 340, the freewheeling device 108 especially prevents the electric motor 2, when it provides torque to the motor unit 2, from driving the spindle 10 faster than the rider pedals, especially when the rider stops pedaling and the electric motor 2 still keeps turning for a short amount of time, because of inertia effects,
the freewheeling device 108 that prevents the rider, by rotating the spindle 10 backwards, from driving the sprocket carrier 340 and the electric motor 2 backwards, the freewheeling device 365 prevents the rider, by rotating the spindle 10 forward, from driving the electric motor 2 if the electric motor 2 is not powered by the motor control unit or when a battery of the ebike is empty.

Fig. 24 shows a schematic view of an electric drive in the form of a motor unit that is provided in an ebike with a conventional powertrain.

Fig. 25 shows a schematic view of an electric drive in the form of a motor unit that is provided in an ebike with a powertrain that comprises an elevated diverter pulley that is arranged in a tight side of a chain between a rear sprocket and a drive sprocket of the motor unit.

### Reference numerals

- 1: Motor unit
- 2: Electric motor
- 3: Motor housing
- 4: External force measurement unit
- 5: Load cell
- 6: First bearing support
- 7: First bearing
- 8: Evaluation unit contact
- 9: Second bearing
- 10: Spindle
- 11: Angular encoder
- 12: Battery holder
- 13: Battery
- 14: (motor) control unit
- 15: memory unit
- 31: Holding plate
- 32: Screw
- 33: First fastening element
- 34: Second fastening element
- 35: Sealing lip
- 51: Load cell carrier seat
- 61: Support ring
- 62: First flap
- 63: First flap end
- 64: First strain gauge
- 64': First strain gauge signal line
- 65: Second flap
- 66: Second flap end
- 67: Second strain gauge
- 67': Second strain gauge signal line
- 68: First bearing seat
- 69: Mechanical guiding
- 71: First outer ring
- 72: First inner ring
- 73: First bearing element
- 91: Second outer ring
- 92: Second inner ring
- 93: Second bearing elements
- 100: Spindle symmetry axis
- 101: First crank
- 102: First pedal
- 103: First end
- 104: First symmetry axis
- 105: Second crank
- 106: Second pedal
- 107: Second end
- 108: Freewheel
- 109: Second symmetry axis
- 110: Deflector blade/chain ring//chain blade
- 111: Hall sensor
- 112: Magnetic ring
- 113: Plastic cover
- 114: Chain
- 130: First pedal spindle
- 131: Second pedal spindle
- 201: First graph
- 202: Second graph
- 205: Hall sensor signal
- 206: Ramp function
- 207: Cross point
- 210: Baseline
- 300: Magnet
- 310: Transmitter bearing
- 311: Pin-ring
- 312: Outer ring
- 313: Inner ring
- 320: outer bearing
- 330: Rotor
- 340: Sprocket carrier
- 341: Bottom bracket
- 342: Housing fastening elements
- 343: First motor housing part
- 344: Second motor housing part
- 345: Third motor housing part
- 370: driving side
- 371:
- 373: bicycle frame
- 360: Third bearing
- 641: First part of a strain gauge
- 642: Second part of a strain gauge
- 803: measurement direction

- 820: strain gauge
- 821: electric lines
- 822: connecting portions
- 850: field
- 855: entries
- 860: origin
- 900: recess
- 910: strain gauge
- fe: External force
- f1: First force
- f2: Second force
- o1: Offset
- p1: First period
- p2: Second period
- m1: Center of a first period
- m3: Center of a third period
- a1: First amplitude
- a2: Second amplitude
- a3: Third amplitude
- fx1: First horizontal force
- fx2: Second horizontal force
- fe1: First external force
- fe2: Second external force

## Claims

1. Method for manufacturing a motor unit (1), comprises the step of
- providing:
an electric motor (2) with a gearbox arrangement with a spindle (10) for applying an external force to the motor unit (1), the external force being applied by a cyclist by applying a first and second external force (fe1, fde2) to a first and second pedal (102, 106) and transferred through a first and second pedal crank (101, 105) to the spindle (10),
a motor control unit (14),
a load cell (5) with a first strain gauge (64) and a second strain gauge (67), the load cell (5) being provided for measuring the external force that is applied to the motor unit (1),
a memory unit (15);
wherein the method further comprises a step of
- connecting the electric motor (2), the load cell (5), and the memory unit (15) with the motor control unit (14),
or
wherein the electric motor (2), the load cell (5), and the memory unit (15) are connected with the motor control unit (14);
and wherein the method further comprises a step of
- loading a computer software into the memory unit (15), the computer software causing the motor control unit (14) to automatically control the supply of electric power from an electric power source to the electric motor (2), based on separate measurements of the first strain gauge (64) and the second strain gauge (67),
or
- wherein the memory unit (15) comprises a computer software for automatically controlling the motor control unit (14) such that a control of supplying electric power from an electric power source to the electric motor (2) is provided, based on the separate measurements of the first strain gauge (64) and the second strain gauge (67);
**characterized in that** the control of supply of power is provided by adding the measurement signals of the first and second strain gauges (64, 67), after multiplying these two measurement signals with two factors, in order to determine a signal Fres, and wherein a position of the spindle (10) is provided by determining the "zero to zero" transitions of the signal Fres or by determining the "max to max" values of Fres, and **in that** the times when the electric motor (2) is required to provide power to the motor unit (1) are determined based on the signal Fres.

2. Method according to claim 1, wherein the loading of the computer software into the memory unit (15) is provided via a data cable by an external computer.

3. Method according to one of the aforementioned claims, wherein the loading of the computer software into the memory unit (15) is provided via a wireless data transmission by an external computer.

4. Method according to one of the preceding claims, comprising evaluating the periodic time of Fres, and to apply motor power to the drive unit (1) whenever Fres is larger than a pre-defined threshold TH and to not apply motor power to the drive unit (1) whenever Fres is smaller than the threshold TH.

5. Method according to one of the preceding claims, wherein the decision of whether or not applying motor power to the drive unit (1) whenever Fres is larger or smaller than a pre-defined threshold TH is made based on the absolute value of Fres.

6. Method according to one of the preceding claims, wherein comprising the step of determining a "zero" line of the signal Fres by calculating the average of Fres over at least one revolution of the spindle (10).

7. Motor unit (1) for an electric vehicle, manufactured by a method according to claim 1.

8. Motor control unit (14) for controlling a motor unit (1) for a vehicle, the motor unit (1) comprising an electric motor (2) with a gearbox arrangement with a spindle (10) for applying an external force to the motor unit (1), the external force being applied by a cyclist by applying a first and second external force (fe1, fe2) to a first and second pedal (102, 106) and transferred through a first and second pedal crank (101, 105) to the spindle (10), and a load cell (5) with a first strain gauge (64) and a second strain gauge (67), the load cell (5) being provided for measuring the external force that is applied to the motor unit (1), the motor control unit (14) being connected with a memory unit (15), wherein the memory unit (15) comprises computer software for automatically controlling the motor control unit (14) such that a control of supplying electric power from an electric power source to the electric motor (2) is provided, based on separate measurements of the first strain gauge (64) and the second strain gauge (67),
**characterized in that** the control of supply of power is provided by adding the measurement signals of the first and second strain gauges (64, 67), after multiplying these two measurement signals with two factors, in order to determine a signal Fres, and wherein a position of the spindle (10) is provided by determining the "zero to zero" transitions of the signal Fres or by determining the "max to max" values of Fres and **in that** the times when the electric motor (2) is required to provide power to the motor unit (1) are determined based on the signal Fres.

## Patentansprüche

1. Verfahren zur Herstellung einer Motoreinheit (1), aufweisend den Schritt
- Bereitstellen:
einen Elektromotor (2) mit einer Getriebeanordnung mit einer Spindel (10) zum Aufbringen einer externen Kraft auf die Motoreinheit (1), wobei die externe Kraft von einem Radfahrer durch Aufbringen einer ersten und zweiten externen Kraft (fe1, fde2) auf ein erstes und zweites Pedal (102, 106) aufgebracht und über eine erste und zweite Pedalkurbel (101, 105) auf die Spindel (10) übertragen wird,
eine Motorsteuereinheit (14),
eine Lastzelle (5) mit einem ersten Dehnungsmessstreifen (64) und einem zweiten Dehnungsmessstreifen (67), wobei die Lastzelle (5) bereitgestellt wird, um die externe Kraft zu messen, die auf die Motoreinheit (1) ausgeübt wird,
eine Speichereinheit (15);
wobei das Verfahren ferner einen Schritt aufweist:
- Verbinden des Elektromotors (2), der Lastzelle (5) und der Speichereinheit (15) mit der Motorsteuereinheit (14),
oder
wobei der Elektromotor (2), die Lastzelle (5) und die Speichereinheit (15) mit der Motorsteuereinheit (14) verbunden sind;
und wobei das Verfahren ferner einen Schritt aufweist:
- Laden einer Computersoftware in die Speichereinheit (15), wobei die Computersoftware bewirkt, dass die Motorsteuereinheit (14) die Zufuhr von elektrischer Energie von einer elektrischen Energiequelle zu dem Elektromotor (2) auf der Grundlage separater Messungen des ersten Dehnungsmessstreifens (64) und des zweiten Dehnungsmessstreifens (67) automatisch steuert,
oder
- wobei die Speichereinheit (15) eine Computersoftware zum automatischen Steuern der Motorsteuereinheit (14) aufweist, so dass eine Steuerung einer Zufuhr von elektrischer Energie von einer elektrischen Energiequelle zu dem Elektromotor (2) auf der Grundlage der separaten Messungen des ersten Dehnungsmessstreifens (64) und des zweiten Dehnungsmessstreifens (67) bereitgestellt wird;
**dadurch gekennzeichnet, dass** die Steuerung der Zufuhr von Energie durch Addieren der Messsignale des ersten und des zweiten Dehnungsmessstreifens (64, 67) bereitgestellt wird, nachdem diese beiden Messsignale mit zwei Faktoren multipliziert wurden, um ein Signal Fres zu bestimmen, und wobei eine Position der Spindel (10) durch Bestimmen der "Null-zu-Null"-Übergänge des Signals Fres oder durch Bestimmen der "Max-zu-Max"-Werte von Fres bereitgestellt wird, und dadurch, dass die Zeiten, zu denen der Elektromotor (2) die Motoreinheit (1) mit Energie versorgen muss, auf der Grundlage des Signals Fres bestimmt werden.

2. Verfahren nach Anspruch 1, wobei das Laden der Computersoftware in die Speichereinheit (15) über ein Datenkabel durch einen externen Computer erfolgt.

3. Verfahren nach einem der vorhergehenden Ansprüche, wobei das Laden der Computersoftware in die Speichereinheit (15) über eine drahtlose Datenübertragung durch einen externen Computer erfolgt.

4. Verfahren nach einem der vorhergehenden Ansprüche, aufweisend ein Auswerten der Periodendauer von Fres und ein Aufbringen von Motorleistung auf die Antriebseinheit (1), immer wenn Fres größer als ein vordefinierter Schwellenwert TH ist, und ein Nichtaufbringen von Motorleistung auf die Antriebseinheit (1), immer wenn Fres kleiner als der Schwellenwert TH ist.

5. Verfahren nach einem der vorhergehenden Ansprüche, wobei die Entscheidung, ob die Antriebseinheit (1) mit Motorleistung versorgt wird oder nicht, immer wenn Fres größer oder kleiner als ein vordefinierter Schwellenwert TH ist, auf der Grundlage des Absolutwerts von Fres getroffen wird.

6. Verfahren nach einem der vorhergehenden Ansprüche, aufweisend den Schritt eines Bestimmens einer "Null"-Linie des Signals Fres durch Berechnen des Durchschnitts von Fres über mindestens eine Umdrehung der Spindel (10).

7. Motoreinheit (1) für ein Elektrofahrzeug, hergestellt nach einem Verfahren nach Anspruch 1.

8. Motorsteuereinheit (14) zum Steuern einer Motoreinheit (1) für ein Fahrzeug, die Motoreinheit (1) aufweisend einen Elektromotor (2) mit einer Getriebeanordnung mit einer Spindel (10) zum Aufbringen einer externen Kraft auf die Motoreinheit (1), wobei die externe Kraft von einem Radfahrer durch Aufbringen einer ersten und zweiten externen Kraft (fe1, fe2) auf ein erstes und zweites Pedal (102, 106) aufgebracht und über eine erste und zweite Pedalkurbel (101, 105) auf die Spindel (10) übertragen wird, und eine Lastzelle (5) mit einem ersten Dehnungsmessstreifen (64) und einem zweiten Dehnungsmessstreifen (67), wobei die Lastzelle (5) bereitgestellt ist, um die externe Kraft zu messen, die auf die Motoreinheit (1) ausgeübt wird, wobei die Motorsteuereinheit (14) mit einer Speichereinheit (15) verbunden ist, wobei die Speichereinheit (15) eine Computersoftware zum automatischen Steuern der Motorsteuereinheit (14) aufweist, so dass eine Steuerung einer Zufuhr von elektrischer Energie von einer elektrischen Energiequelle zu dem Elektromotor (2) auf der Grundlage separater Messungen des ersten Dehnungsmessstreifens (64) und des zweiten Dehnungsmessstreifens (67) bereitgestellt ist,
**dadurch gekennzeichnet, dass** die Steuerung der Zufuhr von Energie durch Addieren der Messsignale des ersten und des zweiten Dehnungsmessstreifens (64, 67) bereitgestellt ist, nachdem diese beiden Messsignale mit zwei Faktoren multipliziert wurden, um ein Signal Fres zu bestimmen, und wobei eine Position der Spindel (10) durch Bestimmen der "Null-zu-Null"-Übergänge des Signals Fres oder durch Bestimmen der "Max-zu-Max"-Werte von Fres bereitgestellt ist, und dadurch, dass die Zeiten, zu denen der Elektromotor (2) die Motoreinheit (1) mit Energie versorgen muss, auf der Grundlage des Signals Fres bestimmt sind.

## Revendications

1. Procédé de fabrication d'une unité de motorisation (1), comprenant l'étape consistant à
- fournir :
un moteur électrique (2) avec un agencement d'engrenage avec une broche (10) pour appliquer une force externe à l'unité de motorisation (1), la force externe étant appliquée par un cycliste en appliquant une première et une deuxième force externe (fe1, fde2) à une première et une deuxième pédale (102, 106) et transférée par l'intermédiaire d'une première et d'une deuxième manivelle de pédale (101, 105) à la broche (10),
une unité de commande de moteur (14),
une cellule de charge (5) avec une première jauge de contrainte (64) et une deuxième jauge de contrainte (67), la cellule de charge (5) étant prévue pour mesurer la force externe qui est appliquée à l'unité de motorisation (1),
une unité de mémoire (15) ;
dans lequel le procédé comprend en outre une étape consistant à
- connecter le moteur électrique (2), la cellule de charge (5) et l'unité de mémoire (15) à l'unité de commande de moteur (14),
ou
dans lequel le moteur électrique (2), la cellule de charge (5) et l'unité de mémoire (15) sont connectés à l'unité de commande de moteur (14) ;
et dans lequel le procédé comprend en outre une étape consistant à
- charger un logiciel informatique dans l'unité de mémoire (15), le logiciel informatique amenant l'unité de commande de moteur (14) à commander automatiquement l'alimentation en énergie électrique provenant d'une source d'énergie électrique vers le moteur électrique (2), sur la base de mesures séparées de la première jauge de contrainte (64) et de la deuxième jauge de contrainte (67),
ou
- dans lequel l'unité de mémoire (15) comprend un logiciel informatique pour commander automatiquement l'unité de commande de moteur (14) de telle sorte qu'une commande d'alimentation en énergie électrique provenant d'une source d'énergie électrique vers le moteur électrique (2) soit fournie, sur la base des mesures séparées de la première jauge de contrainte (64) et de la deuxième jauge de contrainte (67) ;
**caractérisé en ce que** la commande d'alimentation en énergie est fournie en additionnant les signaux de mesure des première et deuxième jauges de contrainte (64, 67), après avoir multiplié ces deux signaux de mesure par deux facteurs, afin de déterminer un signal Fres, et dans lequel une position de la broche (10) est fournie en déterminant les transitions « zéro à zéro » du signal Fres ou en déterminant les valeurs « max à max » de Fres, et **en ce que** les moments auxquels le moteur électrique (2) doit fournir de l'énergie à l'unité de motorisation (1) sont déterminés sur la base du signal Fres.

2. Procédé selon la revendication 1, dans lequel le chargement du logiciel informatique dans l'unité de mémoire (15) est fourni par un câble de données par un ordinateur externe.

3. Procédé selon l'une des revendications précédentes, dans lequel le chargement du logiciel informatique dans l'unité de mémoire (15) est fourni par une transmission de données sans fil par un ordinateur externe.

4. Procédé selon l'une des revendications précédentes, comprenant évaluer la période de Fres, et d'appliquer une puissance motrice à l'unité d'entraînement (1) chaque fois que Fres est supérieur à un seuil prédéfini TH et de ne pas appliquer de puissance motrice à l'unité d'entraînement (1) chaque fois que Fres est inférieur au seuil TH.

5. Procédé selon l'une des revendications précédentes, dans lequel la décision si une puissance motrice est appliquée à l'unité d'entraînement (1) ou non chaque fois que Fres est supérieur ou inférieur à un seuil prédéfini TH est prise sur la base de la valeur absolue de Fres.

6. Procédé selon l'une des revendications précédentes, comprenant l'étape consistant à déterminer une ligne « zéro » du signal Fres en calculant la moyenne de Fres sur au moins une révolution de la broche (10).

7. Unité de motorisation (1) pour un véhicule électrique, fabriquée selon un procédé selon la revendication 1.

8. Unité de commande de moteur (14) pour commander une unité de motorisation (1) pour un véhicule, l'unité de motorisation (1) comprenant un moteur électrique (2) avec un agencement d'engrenage comportant une broche (10) pour appliquer une force externe à l'unité de motorisation (1), la force externe étant appliquée par un cycliste en appliquant une première et une deuxième force externe (fe1, fe2) à une première et une deuxième pédale (102, 106) et transférée par l'intermédiaire d'une première et d'une deuxième manivelle de pédale (101, 105) à la broche (10), et une cellule de charge (5) avec une première jauge de contrainte (64) et une deuxième jauge de contrainte (67), la cellule de charge (5) étant prévue pour mesurer la force externe qui est appliquée à l'unité de motorisation (1), l'unité de commande de moteur (14) étant reliée à une unité de mémoire (15), dans laquelle l'unité de mémoire (15) comprend un logiciel informatique pour commander automatiquement l'unité de commande de moteur (14) de telle sorte qu'une commande d'alimentation en énergie électrique provenant d'une source d'énergie électrique vers le moteur électrique (2) soit fournie, sur la base de mesures séparées de la première jauge de contrainte (64) et de la deuxième jauge de contrainte (67),
**caractérisée en ce que** la commande d'alimentation en énergie est fournie en additionnant les signaux de mesure des première et deuxième jauges de contrainte (64, 67), après avoir multiplié ces deux signaux de mesure par deux facteurs, afin de déterminer un signal Fres, et dans laquelle une position de la broche (10) est fournie en déterminant les transitions « zéro à zéro » du signal Fres ou en déterminant les valeurs « max à max » de Fres, et **en ce que** les moments auxquels le moteur électrique (2) doit fournir de l'énergie à l'unité de motorisation (1) sont déterminés sur la base du signal Fres.
